(19) Europäisches Patentamt
European Patent Office
Office européen des brevets

(11) **EP 4 554 303 A1**

(12) **EUROPEAN PATENT APPLICATION**
published in accordance with Art. 153(4) EPC

(43) Date of publication:
**14.05.2025 Bulletin 2025/20**

(21) Application number: **23845408.6**

(22) Date of filing: **19.07.2023**

(51) International Patent Classification (IPC):
**H04W 72/04** (2023.01)

(52) Cooperative Patent Classification (CPC):
**H04W 72/04; H04W 72/044; H04W 72/0453; H04W 72/21; H04W 74/04; H04W 74/0833**

(86) International application number:
**PCT/CN2023/108163**

(87) International publication number:
**WO 2024/022197 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.07.2022 CN 202210879048**

(71) Applicant: **Vivo Mobile Communication Co., Ltd. Dongguan, Guangdong 523863 (CN)**

(72) Inventors:
• **MO, Yitao**
  **Dongguan, Guangdong 523863 (CN)**
• **WU, Kai**
  **Dongguan, Guangdong 523863 (CN)**

(74) Representative: **Murgitroyd & Company**
**165-169 Scotland Street**
**Glasgow G5 8PL (GB)**

(54) **RA METHOD AND APPARATUS, AND UE, NETWORK-SIDE DEVICE, COMMUNICATION SYSTEM AND READABLE STORAGE MEDIUM**

(57) This application discloses an RA method and apparatus, UE, a network side device, a communication system, and a readable storage medium, and pertains to the field of communication technologies. The RA method according to an embodiment of this application includes: receiving, by the UE, configuration information sent by the network side device, where the configuration information is used to configure at least one of the following: an RA resource corresponding to an RA procedure with Msgl repetition, and a second RA resource corresponding to a contention-based second RA procedure with Msgl repetition; and performing, by the UE, Msgl repetition based on the configuration information, where a first RA resource is a resource corresponding to a contention-free first RA procedure with Msg1 repetition.

FIG. 4

**Description**

**CROSS-REFERENCE TO RELATED APPLICATIONS**

This application claims priority to Chinese Patent Application No. 202210879048.9, filed with the China National Intellectual Property Administration on July 25, 2022, which is incorporated herein by reference in its entirety.

**TECHNICAL FIELD**

This application pertains to the field of communication technologies, and specifically relates to an RA method and apparatus, UE, a network side device, a communication system, and a readable storage medium.

**BACKGROUND**

Currently, after user equipment UE receives RA resource configuration information of a random access (Random Access, RA) procedure sent by a network side device, the UE may select a beam and a preamble (Preamble) associated with the beam, and then send, based on the selected beam and preamble, a first message (Msg1) that carries a preamble index to the network side device. After receiving the Msg1, the network side device may send a Msg2 to the UE, where the Msg2 carries uplink grant information and one preamble index. If the preamble index in the Msg2 is the same as the preamble index carried in the Msg1, the UE considers that the RA procedure succeeds. Otherwise, the UE may increase a value of a preamble counter by 1, initiate an RA attempt again, select an RA resource again, and send the Msg1.

However, according to the method described above, an RA attempt is made again after an RA failure is confirmed, leading to poor robustness of an RA procedure.

**SUMMARY**

Embodiments of this application provide an RA method and apparatus, UE, a network side device, a communication system, and a readable storage medium, so as to resolve a problem of poor robustness of an RA procedure.

According to a first aspect, an RA method is provided, where the method is applied to a terminal, and includes: receiving, by UE, configuration information sent by a network side device, where the configuration information is used to configure at least one of the following: an RA resource corresponding to an RA procedure with Msg1 repetition, and a second RA resource corresponding to a contention-based second RA procedure with Msg1 repetition; and performing, by the UE, Msg1 repetition based on the configuration information, where a first RA resource corresponding to a contention-free first RA procedure with Msg1 repetition.

According to a second aspect, an RA apparatus is provided, including a receiving module and an execution module, where the receiving module is configured to receive configuration information sent by a network side device, where the configuration information is used to configure at least one of the following: an RA resource corresponding to an RA procedure with Msg1 repetition, and a second RA resource corresponding to a contention-based second RA procedure with Msg1 repetition; or the execution module is configured to perform Msg1 repetition based on the configuration information received by the receiving module, where a first RA resource corresponding to a contention-free first RA procedure with Msg1 repetition.

According to a third aspect, an RA method is provided, where the method is applied to a network side device, and includes: sending, by the network side device, configuration information to UE, where the configuration information is used to configure at least one of the following: a first RA resource corresponding to a contention-free first RA procedure with Msg1 repetition, and a second RA resource corresponding to a contention-based second RA procedure with Msg1 repetition, where the configuration information is used by the UE to perform Msg1 repetition.

According to a fourth aspect, an RA apparatus is provided, where the apparatus may include: a sending module, configured to send configuration information to UE, where the configuration information is used to configure at least one of the following: a first RA resource corresponding to a contention-free first RA procedure with Msg1 repetition, and a second RA resource corresponding to a contention-based second RA procedure with Msg1 repetition, where the configuration information is used by the UE to perform Msg1 repetition.

According to a fifth aspect, UE is provided, where the UE includes a processor and a memory, the memory stores a program or instructions capable of running on the processor, and the program or instructions are executed by the processor to implement the steps of the method according to the first aspect.

According to a sixth aspect, UE is provided, where the UE includes a processor and a communication interface, the communication interface is configured to receive configuration information sent by a network side device, and the configuration information is used to configure at least one of the following: an RA resource corresponding to an RA procedure with Msg1 repetition, and a second RA resource corresponding to a contention-based second RA procedure with Msg1 repetition; or the processor is configured to perform Msg1 repetition based on the configuration information, where a first RA resource corresponding to a contention-free first RA procedure with Msg1 repetition.

According to a seventh aspect, a network side device is provided, where the network side device includes a processor and a memory, the memory stores a program or instructions capable of running on the processor, and the program or instructions are executed by the processor to implement the steps of the method according to the third aspect.

According to an eighth aspect, a network side device is provided, where the network side device includes a processor and a communication interface, the communication interface is configured to send configuration information to UE, and the configuration information is used to configure at least one of the following: a first RA resource corresponding to a contention-free first RA procedure with Msg1 repetition, and a second RA resource corresponding to a contention-based second RA procedure with Msg1 repetition, where the configuration information is used by the UE to perform Msg1 repetition.

According to a ninth aspect, a communication system is provided, where the communication system includes a terminal and a network side device, the terminal may be configured to perform the steps of the RA method according to the first aspect, and the network side device may be configured to perform the steps of the RA method according to the third aspect.

According to a tenth aspect, a readable storage medium is provided, where the readable storage medium stores a program or instructions, and the program or instructions are executed by a processor to implement the steps of the method according to the first aspect, or to implement the steps of the method according to the third aspect.

According to an eleventh aspect, a chip is provided, where the chip includes a processor and a communication interface, the communication interface is coupled to the processor, and the processor is configured to run a program or instructions to implement the method according to the first aspect, or to implement the method according to the third aspect.

According to a twelfth aspect, a computer program/program product is provided, where the computer program/-program product is stored in a storage medium, and the computer program/program product is executed by at least one processor to implement the steps of the method according to the first aspect or the third aspect.

In the embodiments of this application, the UE may receive configuration information sent by the network side device, where the configuration information is used to configure an RA resource corresponding to an RA procedure with Msg1 repetition. In addition, the UE may perform Msg1 repetition based on the configuration information. According to this solution, the configuration information received by the UE is used to configure the RA resource corresponding to the RA procedure with Msg1 repetition, so that the UE can perform Msg1 repetition based on the configuration information, thereby improving a success rate of the random access procedure, and improving robustness of the random access procedure.

**BRIEF DESCRIPTION OF DRAWINGS**

FIG. 1 is a schematic diagram of an architecture of a communication system according to an embodiment of this application;
FIG. 2 is a first schematic flowchart of selecting an RA resource in an RA procedure according to a related technology;
FIG. 3 is a second schematic flowchart of selecting an RA resource in an RA procedure according to a related technology;
FIG. 4 is a schematic flowchart of an RA method according to an embodiment of this application;
FIG. 5 is a first schematic structural diagram of an RA apparatus according to an embodiment of this application;
FIG. 6 is a second schematic structural diagram of an RA apparatus according to an embodiment of this application;
FIG. 7 is a first schematic structural diagram of UE according to an embodiment of this application;
FIG. 8 is a second schematic structural diagram of UE according to an embodiment of this application; and
FIG. 9 is a schematic structural diagram of a network side device according to an embodiment of this application.

**DESCRIPTION OF EMBODIMENTS**

The following clearly describes the technical solutions of embodiments of this application with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

In the specification and claims of this application, the terms "first", "second", and the like are intended to distinguish between similar objects, but are not intended to describe a specific order or sequence. It should be understood that the terms used in such a way are interchangeable in proper circumstances, so that the embodiments of this application can be implemented in an order other than the order illustrated or described herein. In addition, objects distinguished by "first" and "second" are usually of a same type, and a number of objects is not limited. For example, there may be one or more first objects. In addition, in the specification and the claims, "and/or" represents at least one of connected objects, and a character "/" generally represents an "or" relationship between associated objects.

It should be noted that technologies described in the embodiments of this application are not limited to a Long Term Evolution (Long Term Evolution, LTE)/an LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-Carrier Frequency Division Multiple Access (Single-carrier Frequency Division Multiple Access, SC-FDMA), and another system. The terms "system" and "network" in the embodiments of this application are often used interchangeably. The described technologies may be used in the above-mentioned systems and radio technologies, and may also be used in another system and radio technology. The following descriptions depict a New Radio (New Radio, NR) system as an example, and NR terms are used in most of the following descriptions, but these technologies may also be applied to applications other than an NR system application, for example, a 6th generation (6th Generation, 6G) communication system.

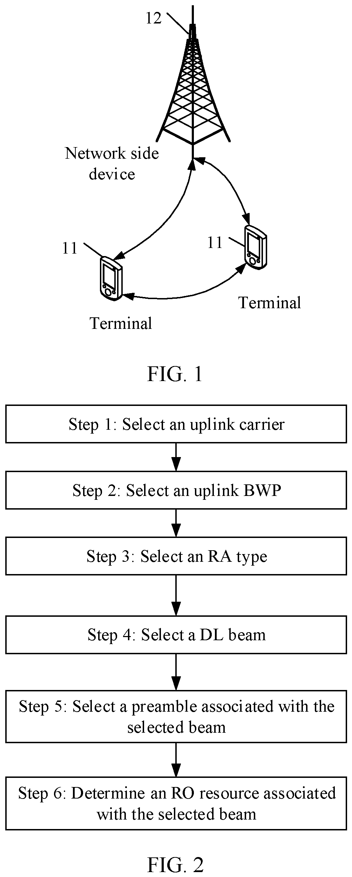

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer), also referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart household (a household device with a wireless communication function, for example, a refrigerator, a television set, a washing machine, or furniture), a game console, a personal computer (personal computer, PC), an automated teller machine, or a self-service machine. The wearable device includes: a smart watch, a smart band, a smart headset, smart glasses, a smart jewelry (a smart bracelet, a smart hand chain, a smart ring, a smart necklace, a smart bangle, a smart anklet, or the like), a smart wrist strap, smart clothing, and the like. It should be noted that a specific type of the terminal 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another suitable term in the field. The base station is not limited to a specific technical term provided that same technical effects are achieved. It should be noted that in the embodiments of this application, only a base station in an NR system is used as an example for description, but a specific type of the base station is not limited.

With reference to the accompanying drawings, the following describes, in detail by using some embodiments and application scenarios thereof, an RA method and apparatus, UE, a network side device, a communication system, and a readable storage medium that are provided in the embodiments of this application.

The following first briefly describes an RA procedure in the related technology.

(I) Contention-free RA procedure:

1. UE receives RA resource configuration information that corresponds to the contention-free RA procedure and that is indicated by a network side device. The configuration information may be used for the contention-free RA procedure that is triggered by beam failure recovery (Beam Failure Recovery, BFR), handover (Handover, HO), or a physical downlink control channel (Physical Downlink Control Channel, PDCCH) command. The configuration information indicates a beam indication (a single side band (Single Side Band, SSB) or a channel state information-reference signal (Channel State Information-Reference Signal, CSI-RS) beam) applicable to the contention-free RA procedure and an associated non-contention preamble. For the contention-free RA procedure triggered by the BFR and the HO, the configuration information may further include configuration information of a random access occasion (RACH Occasion, RO), and a reference signal receiving power (Reference Signal Receiving Power, RSRP) threshold configuration.

2. After the UE obtains the configuration information, for the contention-free RA procedure triggered by the BFR and the HO, the UE determines, based on measured beam quality and an RSRP threshold, whether to use a contention-free RA resource (for example, the contention-free RA resource is used only when the beam quality is higher than the RSRP threshold). Then, after selecting a beam and a contention-free preamble corresponding to the beam, the UE sends a first message (carrying the contention-free preamble) to the network side device. After receiving the first message, the network side device sends a second message (a random access response (namely, random access response, RAR)) to the UE, where the message carries uplink grant information and an index of an RA preamble (preamble ID). If the preamble ID is the same as the index of the random access preamble carried in the first message sent by the UE, the UE considers that the RA procedure succeeds; otherwise, the UE increases a value of a preamble transmission counter (PREAMBLE_TRANSMISSION_COUNTER) by 1, initiates an RA attempt again, selects an RA resource again, and sends the first message.

(II) RA resource selection procedure

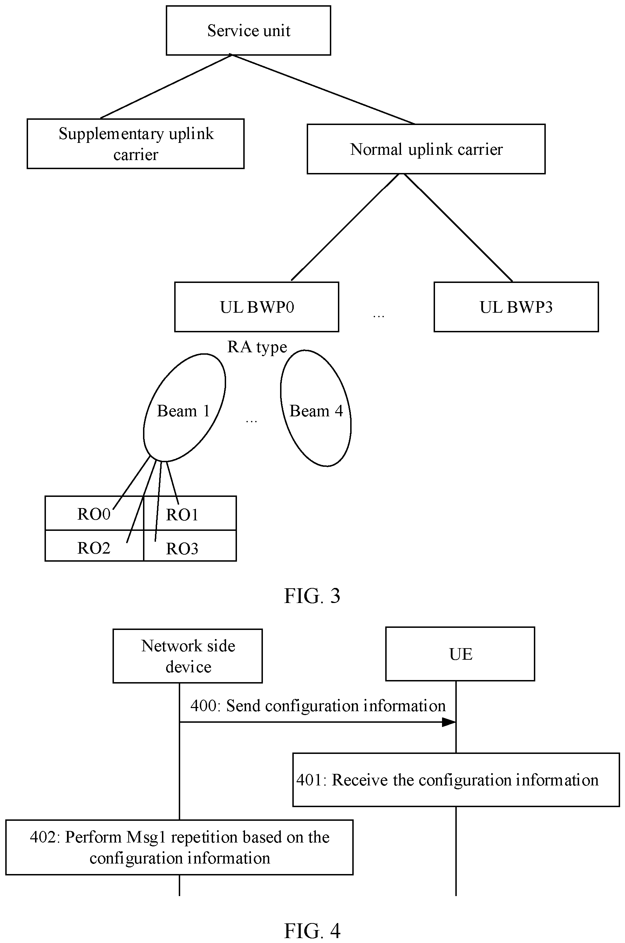

For example, as shown in FIG. 2 and FIG. 3, an RA resource selection procedure in a related technology may include the following step 1 to step 6.

Step 1: Select an uplink (Uplink, UL) carrier. Specifically, the UE first selects an uplink carrier based on a downlink path loss reference and a first RSRP threshold.

For example, an uplink carrier is selected from normal uplink carriers.

Step 2: Select an uplink bandwidth part (Bandwidth Part, BWP). Specifically, if there is an RA resource on the activated uplink bandwidth part (Bandwidth Part, BWP) of the selected uplink carrier, the UE performs RA on the currently activated uplink BWP. Otherwise, the UE switches to an initial uplink BWP.

For example, an uplink UL BWP0 in FIG. 3 is selected.

After the uplink BWP is selected, for Rel-17 CovEnh, if a downlink path loss reference is lower than a second RSRP threshold and the network side device configures a corresponding RA resource for performing third message (Msg3) repetition, Msg3 repetition may be requested.

Step 3: Select an RA type. Specifically, for the Rel-16 technology, the UE may further select an RA type, for example, 4-step RA or 2-step RA, based on the downlink path loss reference and the RSRP threshold (for example, at least one of the first RSRP threshold and the second RSRP threshold).

Step 4: Select a downlink (Downlink) beam. Specifically, after the RA type is selected, the UE selects an SSB beam based on a measured L1-RSRP and a third RSRP threshold. For example, a beam 1 in FIG. 3 is selected.

Step 5: Select a preamble associated with the selected beam. Specifically, the UE selects, based on the selected RA type, a preamble from preambles that correspond to the RA type and that are associated with the selected SSB.

Step 6: Determine an RO resource associated with the selected beam. Specifically, the UE randomly with equal probability selects, based on the selected RA type, an RO resource from RO resources that correspond to the selected RA type and that are associated with the selected SSB. For example, an RO 1 associated with the beam 1 is selected.

It may be learned from the foregoing descriptions of (I) and (II) that, in the related technology, the UE makes an RA attempt again after an RA failure is confirmed, leading to poor robustness of a contention-free RA procedure.

The RA method provided in the embodiments of this application may be applied to an RA procedure with Msg1 repetition. According to the method, the UE may obtain RA resource configuration information that corresponds to the RA procedure with Msg1 repetition and that is indicated by the network side device, so that the UE can perform the RA procedure with Msg1 repetition based on the configuration information, thereby improving robustness of the RA procedure.

An embodiment of this application provides an RA method. FIG. 4 is a schematic flowchart of an RA method according to an embodiment of this application. As shown in FIG. 4, the RA method provided in this embodiment of this application may include the following step 400 to step 402.

Step 400: A network side device sends configuration information to UE.

Step 401: The UE receives the configuration information.

In this embodiment of this application, the configuration information may be used to configure an RA resource corresponding to an RA procedure with Msg1 repetition.

Optionally, the foregoing configuration information may be used to configure at least one of the following: a first RA resource corresponding to a contention-free first RA procedure with Msg1 repetition, and a second RA resource corresponding to a contention-based second RA procedure with Msg1 repetition. In this way, at least one of the first RA resource and the second RA resource may be configured in the configuration information, thereby increasing a probability that the UE successfully performs Msg1 repetition.

Optionally, the foregoing configuration information may be further used to configure at least one of the following: a seventh RA resource corresponding to a contention-based third RA procedure to which Msg1 repetition is not applicable, and an eighth RA resource corresponding to a contention-free fourth RA procedure to which Msg1 repetition is not applicable. In this way, when the UE cannot perform the first RA procedure and the second RA procedure, the UE may perform the third RA procedure based on the seventh RA resource or perform the fourth RA procedure based on the eighth RA resource. This can further improve robustness of the RA procedure.

Optionally, the foregoing configuration information may include at least one of the following: a beam selection threshold; a first repetition transmission indication; a second repetition transmission indication; a first resource set list of the first RA resource; a second resource set list of the second RA resource; a third repetition transmission indication; a target beam identifier; a total number of repetition times of the Msg1; or a target preamble identifier.

The beam selection threshold may be used for beam selection in the first RA procedure.

The first repetition transmission indication may be used to indicate to trigger the first RA procedure.

The second repetition transmission indication may be used to indicate a beam pattern with Msg1 repetition.

Each resource set list may include at least one resource set element, and each resource set element indicates at least one of the first RA resource or the second RA resource.

The third repetition transmission indication may be used to indicate some resource set elements in the first resource set list or the second resource set list.

The target beam identifier may be used to indicate a target beam, and the target beam is associated with at least one of the first RA resource or the second RA resource.

The target preamble identifier is used to indicate a contention-free preamble resource.

Optionally, the first repetition transmission indication may be configured by using a first PDCCH or first radio resource control (Radio Resource Control, RRC) dedicated signaling. If the first repetition transmission indication is configured by using the first PDCCH, when a value of a first index field corresponding to the first repetition transmission indication in the first PDCCH is 1, the first repetition transmission indication is used by the UE to trigger the contention-free first RA procedure with Msg1 repetition. In addition, if the first PDCCH further carries the third repetition transmission indication in this case, the UE ignores a preamble index (preamble index) field or an SSB index field carried in the first PDCCH. Optionally, the first PDCCH further includes a mask (mask) index field of a physical random access channel (Physical Random Access Channel, PRACH). The first index field is located after the mask index field.

Optionally, the target beam identifier may be indicated by using a second PDCCH or second RRC dedicated signaling in the configuration information.

Optionally, the third repetition transmission indication may be indicated by using a third PDCCH or third RRC dedicated signaling.

Optionally, assuming that the first RA resource is associated with N first beams and the second RA resource is associated with Q sixth beams, the target beam may be one of the N first beams, or may be one of the Q sixth beams.

Optionally, the RA resource indicated by each resource set element may include at least some beam resources associated with one or more beams, and the one or more beams are at least some beams associated with the RA resource configured in the configuration information. In this way, an RA resource may be selected, based on the beam, from RA resources indicated by each resource set element.

Optionally, the beam selection threshold may include at least one of the following: a first threshold, a second threshold, a third threshold, and a fourth threshold. The first threshold is used for SSB beam selection in the first RA procedure. The second threshold is used for CSI-RS beam selection in the first RA procedure. The third threshold is used for SSB beam selection in the contention-based RA procedure with Msg1 repetition. The fourth threshold is used for CSI-RS beam selection in the contention-free RA procedure to which Msg1 repetition is not applicable.

Optionally, if the network side device configures at least one of the first RA resource, the second RA resource, a third RA resource, and a fourth RA resource; the first RA resource includes an RA resource associated with an SSB beam; and the fourth RA resource includes at least one of the following: the RA resource associated with the SSB beam, and an RA resource associated with a CSI-RS beam, in this case, the network side device may configure the first threshold and the third threshold, that is, the configuration information may include the first threshold and the third threshold.

Further, if the network side device does not configure the first threshold, but configures the third threshold, the UE may set a value of the third threshold to a value of the first threshold.

Optionally, if the network side device configures the RA resource corresponding to the first RA procedure, that is, the first RA resource includes the RA resource associated with the SSB beam, the network side device may further configure the second RA resource at the same time.

Optionally, if the network side device configures the first RA resource, the second RA resource, the third RA resource, and the fourth RA resource; the first RA resource includes the RA resource associated with the CSI-RS beam; and the fourth RA resource includes the RA resource associated with the CSI-RS beam, in this case, the network side device may configure the second threshold and the fourth threshold. Further, if the network side device does not configure the second threshold, but configures the fourth threshold, the UE may set a value of the fourth threshold to the value of the first threshold after receiving the configuration information.

Optionally, if the network side device configures the RA resource corresponding to the contention-free RA procedure with Msg1 repetition, the network side device further configures the RA resource (namely, the second RA resource) corresponding to the contention-based RA procedure with Msg1 repetition at the same time.

Optionally, the second repetition transmission indication may indicate a first beam pattern or a second beam pattern. The first beam pattern is that different times of repetition transmission are performed by using a same beam. The second beam pattern is that different times of repetition transmission are performed by using different beams.

It should be noted that "different times of repetition transmission are performed by using different beams" may be understood as follows: Msg1 repetition is performed by using all or some of resources associated with at least two beams.

"Different times of repetition transmission are performed by using a same beam" may be understood as follows: Msg1 repetition is performed by using all or some of resources associated with one beam.

Optionally, each resource set element in the first resource set list may indicate at least one RA resource in the first RA resource.

Optionally, each resource set element in the second resource set list may indicate at least one RA resource in the second RA resource.

Generally, at least the first RA resource is configured in the configuration information. In the RA method provided in this embodiment of this application, the UE preferentially performs the contention-free RA procedure with Msg1 repetition.

In this way, at least one of the beam selection threshold, the first repetition transmission indication, the second repetition transmission indication, the first resource set list of the first RA resource, the second resource set list of the second RA resource, the third repetition transmission indication, the total number of repetition times of the Msg1, and the target beam identifier may be configured in the configuration information, so that after receiving the configuration information, the UE selects a random access resource based on one or more types of information in the configuration information, thereby improving flexibility and diversity of selection of the random access resource for performing Msg1 repetition.

Optionally, the RA resource configured in the foregoing configuration information may be associated with at least one beam, and the RA resource configured in the configuration information may include at least one of the following: a second beam resource associated with the at least one beam; or a configuration parameter related to the RA procedure.

The second beam resource may include at least one of the following: a number of repetition times associated with each of the foregoing at least one beam; a preamble resource associated with each of the foregoing at least one beam; an RO resource associated with each of the foregoing at least one beam; or a beam pattern associated with each of the foregoing at least one beam.

It should be noted that the at least one beam is configured in the configuration information, and the at least one beam may also be referred to as a part of the RA resource.

Optionally, the configuration parameter related to the RA procedure may include a preamble received target power, and the like.

In this way, the RA resource configured in the configuration information may correspond to at least one beam, so that after receiving the configuration information, the UE can select, through beam selection, the RA resource used for Msg1 repetition from the RA resource configured in the configuration information, thereby accurately selecting the RA resource.

Step 402: The UE performs Msg1 repetition based on the configuration information.

In this embodiment of this application, after receiving the configuration information, the UE may select an RA resource (for example, the following target RA resource) based on the configuration information, and then perform Msg1 repetition based on the selected RA resource.

Optionally, if the target RA resource is selected from the first RA resource, the UE may perform Msg1 repetition in the first RA procedure based on the target RA resource. If the target RA resource is selected from the second RA resource, the UE may perform Msg1 repetition in the second RA procedure based on the target RA resource.

Optionally, the UE may select the target RA resource by using a media access control (Media Access Control, MAC) entity in the UE, and then the MAC entity may instruct a physical layer in the UE to perform, based on the target RA resource, Msg1 repetition.

Optionally, step 402 may be specifically implemented by using the following step 402a.

Step 402a: In a case that the UE considers that Msg1 repetition is applicable to a current random access procedure (the UE independently determines when to perform Msg1 repetition), or the first repetition transmission indication is configured in the configuration information (the network side device determines when the UE performs Msg1 repetition), the UE performs Msg1 repetition based on the configuration information.

Optionally, if a measured value (for example, an RSRP) corresponding to the downlink path loss reference is less than a first threshold (for example, an RSRP threshold), the UE may consider that Msg1 repetition is applicable to the current RA procedure. Otherwise, the UE considers that Msg1 repetition is not applicable to the current RA procedure. Certainly, in actual implementation, the UE may further determine, by using any other possible method, whether Msg1 repetition is applicable to the current RA procedure, which may be specifically determined based on an actual use requirement.

In this way, on one hand, in a case that the UE considers that Msg1 repetition is applicable to the current random access procedure, the UE may perform Msg1 repetition based on the configuration information. In other words, the UE may independently determine an occasion for performing Msg1 repetition. On the other hand, in a case that the first repetition transmission indication is configured in the configuration information, the UE may perform Msg1 repetition based on the configuration information. In other words, the network side device determines an occasion for the UE to perform Msg1 repetition. This can improve flexibility of starting to perform Msg1 repetition by the UE.

Optionally, step 402 may be specifically implemented by using the following step 402b.

Step 402b: The UE performs Msg1 repetition based on the configuration information and a first rule.

Optionally, in a possible implementation, the UE may perform Msg1 repetition based on the configuration information, the first rule, and the first beam pattern. In another possible manner, the UE may perform Msg1 repetition based on the configuration information, the first rule, and the second beam pattern.

Optionally, in the foregoing possible implementation, the configuration information may include at least one of the following: the beam selection threshold; the second repetition transmission indication; the first resource set list; the second resource set list; or the third repetition transmission indication.

For descriptions of the first beam pattern and the second beam pattern, refer to related descriptions of the first beam pattern and the second beam pattern in the foregoing embodiment.

The following describes in detail the first rule in a possible implementation.

Optionally, it is assumed that the first RA resource is associated with N first beams, where N is a positive integer. In this case, the first rule may include at least one of the following:

Rule 1: If the second repetition transmission indication indicates a first beam pattern, and a number of second beams in the N first beams is greater than or equal to a preset number, the UE selects all or some of RA resources associated with X first beams in the N first beams as target RA resources.

Rule 2: If the first resource set list is configured in the configuration information, and a number of third beams associated with each of the at least one first resource set element is greater than or equal to a preset number, the UE selects all or some of RA resources associated with X fourth beams associated with the second resource set element as target RA resources.

The first beam pattern is that different times of repetition transmission are performed by using different beams. The second beam is a first beam meeting a first condition in the N first beams.

The foregoing at least one first resource set element is a resource set element in the first resource set list.

The second resource set element is one of the at least one resource set element.

A third beam associated with each first resource set element is a first beam meeting the first condition in first beams that are associated with one first resource set element.

The first condition is that a measured value of a beam is greater than the beam selection threshold, where X is an integer greater than 1.

The target RA resource is used to perform Msg1 repetition.

It may be understood that in rule 1, the configuration information includes the second repetition transmission indication, and the second repetition transmission indication indicates the first beam pattern.

It should be noted that the "beam associated with the resource set element" includes a beam associated with each RA resource indicated by the resource set element.

For example, a resource set element #e1 indicates an RA resource 00 (associated with beam 1), an RA resource 01 (associated with beam 2), an RA resource 02 (associated with beam 1), and an RA resource 03 (associated with beam 2). In this case, beams associated with the resource set element #e1 include beam 1 and beam 2.

In addition, "the UE selects all or some of RA resources associated with X fourth beams associated with the second resource set element as target RA resources" may be understood as follows: The UE selects all or some of RA resources associated with X fourth beams from the RA resources indicated by the second resource set element as the target RA resources.

For example, the second resource set element is the resource set element #e1, and the resource set element #e1 indicates the RA resource 00 (associated with beam 1), the RA resource 01 (associated with beam 2), the RA resource 02 (associated with beam 1), and the RA resource 03 (associated with beam 2). A resource set element #e2 indicates an RA resource 04 (associated with beam 1), an RA resource 05 (associated with beam 5), an RA resource 06 (associated with beam 4), and an RA resource 07 (associated with beam 2). In this case, the UE may select the RA resource 00 and the RA resource 01 that are indicated by the resource set element #e1 as the target RA resources.

Optionally, when both the first resource set list and the second repetition transmission indication indicating the first beam are configured in the configuration information, the UE may preferentially select a target RA resource based on rule 2.

Optionally, in rule 1, the foregoing X first beams may be specifically beams randomly selected from the N first beams, or may be X beams, selected from the N first beams, whose measured values are greater than the first threshold.

Optionally, the at least one first resource set element in the foregoing rule 2 may be specifically a resource set element in a third resource set element. The third resource set element includes one of the following:

all resource set elements in the first resource set element list;
a resource set element determined from the first resource set list based on the target beam identifier; or
a resource set element determined from the first resource set list based on the third repetition transmission indication.

For example, it is assumed that the target beam identifier indicates a target beam, and the target beam is associated with a preamble sequence index #60 and an RO resource set 1 in the first RA resource. In this case, for each resource set element in the first resource set element list, if an RA resource indicated by a resource set element includes the preamble sequence index #60 and the RO resource set 1, the UE may determine the resource set element as one of the third resource set elements.

For another example, it is assumed that the first resource set element list includes the resource set element #e1 and the resource set element #e2. In this case, if the third repetition transmission indication indicates #e1, the third resource set element is the resource set element #e1.

Optionally, it is assumed that the foregoing beam selection threshold includes the first threshold and the second threshold, the first threshold is used for SSB beam selection in the first RA procedure, and the second threshold is used for CSI-RS beam selection in the first RA procedure. In this case, the first condition may include at least one of the following: A measured value of an SSB beam is greater than the first threshold; or a measured value of the CSI-RS beam is greater than the second threshold.

Optionally, when the beam selection threshold includes the first threshold, the first condition may include: A measured value of the SSB beam is greater than the first threshold; and when the beam selection threshold includes the second threshold, a measured value of the CSI-RS beam is greater than the second threshold.

Optionally, the value of the foregoing preset number is determined based on at least one of the following: a number threshold configured in the configuration information, that is, the network side device may explicitly configure a number threshold in the configuration information; a first preset proportion and a number of beams associated with the first RA resource; or a total number of repetition times of the Msg1.

Optionally, the first preset proportion may be configured by the network side device or specified in a protocol. For example, in an example in which the value of the preset number is determined based on the first preset proportion and the number of beams associated with the first RA resource, Value of the preset number = Number of beams associated with the first RA resource * First preset proportion.

Optionally, X is determined based on one of the following: the number threshold configured in the configuration information; the preset number and a second preset proportion; or the total number of repetition times of the Msg1. Optionally, the first preset proportion may be configured by the network side device or specified in a protocol. For example, in an example in which X is determined based on the preset number and the second preset proportion, X = Preset number * Second preset proportion.

Optionally, when both the value of the preset number and X are determined based on the total number of repetition times of the Msg1, both X and the value of the preset number may be equal to the total number of repetition times of the Msg1. In this case, the value of the preset number and X are equivalent (for example, are a same value).

Optionally, when the first rule includes rule 2, the first rule may further include rule 3.

Rule 3: In the first RA procedure, if a measured value of a fifth beam in the X fourth beams is less than or equal to the beam selection threshold, the UE quits transmitting, based on an RA resource associated with the fifth beam in the target RA resources, the first message.

Optionally, it is assumed that the second RA resource is associated with Q sixth beams, where Q is a positive integer. In this case, the first rule may further include rule 4 or rule 5.

Rule 4: If the second repetition transmission indication indicates the first beam pattern, a number of second beams in the N first beams is less than a preset number, and the second RA resource is configured in the configuration information, the UE selects all or some of RA resources associated with the X sixth beams in the Q sixth beams as the target RA resources.

Rule 5: If the first resource set list and the second RA resource are configured in the configuration information, and a number of seventh beams associated with each of the third resource set element is less than the preset number, the UE selects all or some of RA resources associated with the X sixth beams in the Q sixth beams as the target RA resources.

The third resource set element includes one of the following:

all resource set elements in the first resource set element list;
a resource set element determined from the first resource set list based on the target beam identifier; or
a resource set element determined from the first resource set list based on the third repetition transmission indication.

The seventh beam associated with each of the third resource set element is a first beam meeting the first condition in first beams that are associated with one of the third resource set element.

It may be understood that rule 4 is executed in a case that rule 1 is not met, and rule 5 is executed in a case that rule 2 is not met.

The following describes the RA method provided in this embodiment of this application by using examples with reference to specific examples.

Example 1: It is assumed that the second repetition transmission indication, the first RA resource, the first threshold, the second threshold, and the second repetition transmission indication indicating the first beam pattern are configured in the configuration information, where the first RA resource is associated with N first beams, and the UE considers that Msg1 repetition is applicable to a current random access procedure.

In this case, if a sum of a number of SSB beams whose measured values (for example, RSRPs) of the SSB beams are higher than the first threshold in the N first beams and a number of CSI-RS beams whose measured values of CSI-RS beams are higher than the second threshold in the N first beams is greater than or equal to the preset number, the UE sequentially selects different X first beams from the N first beams, and a measured value of each of the X first beams is greater than the first threshold or the second threshold; then, the UE selects all or some of RA resources associated with the X first beams as the target RA resources. (In other words, the target RA resource is selected based on rule 1.)

Then, the UE performs Msg1 repetition based on the X first beams. For example, the MAC entity in the UE sequentially instructs the physical layer of the UE to perform Msg1 repetition each time based on all or some of RA resources (which are a part of the target RA resources) associated with one of the X first beams.

Example 2: It is assumed that the first resource set list, the first RA resource, the first threshold, and the second threshold are configured in the configuration information, where the first RA resource is associated with N first beams, and the UE considers that Msg1 repetition is applicable to a current random access procedure. In this case, among first beams associated with one or more resource set elements (namely, at least one first resource set element) in the first resource set list, if a sum of a number of SSB beams whose measured values (for example, RSRPs) of the SSB beams are higher than the first threshold and a number of CSI-RS beams whose measured values of CSI-RS beams are higher than the second threshold is greater than or equal to the preset number, the UE randomly selects one resource set element from the one or more resource set elements, and performs Msg1 repetition based on an RA resource indicated by the resource set element. Specifically, the UE randomly selects X beams (namely, X fourth beams) from the beams associated with the resource set element, and selects, based on the X beams from RA resources indicated by the resource set element, all or some of RA resources associated with X first beams as the target RA resources. (In other words, the target RA resource is selected based on rule 2.)

After the UE selects the target RA resource, the UE may perform Msg1 repetition based on the target RA resource. Specifically, the MAC entity in the UE indicates one of the X beams (and a corresponding RA resource) each time to the physical layer of the UE, so that the physical layer performs transmission of the Msg1 once based on the beam (and the corresponding RA resource).

Additionally, in a repetition transmission process of the Msg1, if a measured value of any SSB beam selected by the UE is less than or equal to (or not higher than) the first threshold, or a measured value of any CSI-RS beam selected by the UE is less than or equal to (or not higher than) the second threshold, the UE quits the current transmission of the first message. For example, the UE selects four (X = 4) beams in the second resource set element, namely, a beam SSB#0 (for performing transmission of the Msg1 once), a beam SSB#1 (for performing transmission of the Msg1 once), an SSB#2 (for performing transmission of the Msg1 once), and an SSB#3 (for performing transmission of the Msg1 once). Only RSRPs of the SSB#0 and the SSB#1 are higher than the first threshold. Therefore, the MAC entity sequentially indicates the SSB#0 (and a corresponding RA resource) to the physical layer for performing transmission of the Msg1 once, and then indicates the SSB#1 (and a corresponding RA resource) to the physical layer for performing transmission of the Msg1 once. Additionally, the UE does not indicate the SSB#2 or the SSB#2 to the physical layer for performing transmission of the Msg1.

Example 3: It is assumed that the first RA resource, the first resource set element list, the third repetition transmission indication, the first threshold, and the second threshold are configured in the configuration information, where the first RA resource is associated with N first beams, the third repetition transmission indication indicates the resource set element #e1 in the first resource set element list (specifically, the third repetition transmission indication may indicate an index value of the resource set element #e1), and the UE considers that Msg1 repetition is applicable to the current random access procedure.

In this case, among first beams associated with the resource set element #e1 (namely, the third resource set element), if a sum of a number of SSB beams whose measured values (for example, RSRPs) of the SSB beams are higher than the first threshold and a number of CSI-RS beams whose measured values of CSI-RS beams are higher than the second threshold is greater than or equal to the preset number, the UE performs Msg1 repetition based on the RA resource indicated by the resource set element #e1 (namely, the second resource set element). Specifically, the UE randomly selects X beams (namely, X fourth beams) from the beams associated with the resource set element #e1, and selects, based on the X beams from RA resources indicated by the resource set element #e1, all or some of RA resources associated with the X beams as the target RA resources. (In other words, the target RA resource is selected based on rule 2.)

After the UE selects the target RA resource, the UE may perform Msg1 repetition based on the target RA resource. Specifically, the MAC in the UE indicates one of the X beams (and a corresponding RA resource) each time to the physical layer of the UE, so that the physical layer performs transmission of the Msg1 once based on the beam (and the corresponding RA resource).

Additionally, in a repetition transmission process of the Msg1, if a measured value of any SSB beam selected by the UE is less than or equal to (or not higher than) the first threshold, or a measured value of any CSI-RS beam selected by the UE is less than or equal to (or not higher than) the second threshold, the UE quits the current transmission of the first message. For example, the UE selects four (X = 4) beams in the second resource set element, namely, a beam SSB#0 (for performing transmission of the Msg1 once), a beam SSB#1 (for performing transmission of the Msg1 once), an SSB#2 (for performing transmission of the Msg1 once), and an SSB#3 (for performing transmission of the Msg1 once). Only RSRPs of the SSB#0 and the SSB#1 are higher than the first threshold. Therefore, the MAC entity sequentially indicates the SSB#0 (and a corresponding RA resource) to the physical layer for performing transmission of the Msg1 once, and then indicates the SSB#1 (and a corresponding RA resource) to the physical layer for performing transmission of the Msg1 once. Additionally, the UE does not indicate the SSB#2 or the SSB#2 to the physical layer for performing transmission of the Msg1.

Example 4: It is assumed that the first RA resource, the first resource set element list, the target beam identifier, the target preamble sequence index, the first threshold, and the second threshold are configured in the configuration information, where the first RA resource is associated with N first beams, each of the resource set element #e1 and the resource set element #e2 in the first resource set element list includes the target beam identifier, the target preamble sequence index indicates a contention-free preamble (resource), the UE considers that Msg1 repetition is applicable to the current random access procedure, and the target preamble identifier indicates a contention-free preamble resource associated with the target beam.

In this case, among first beams associated with the resource set element #e1 and the resource set element #e1 (namely, the third resource set element, that is, the second resource set element), if a sum of a number of SSB beams whose measured values (for example, RSRPs) of the SSB beams are higher than the first threshold and a number of CSI-RS beams whose measured values of CSI-RS beams are higher than the second threshold is greater than or equal to the preset number, the UE randomly selects one resource set element (for example, the resource set element #e1) from the resource set elements #e1 and #e2, and performs Msg1 repetition based on an RA resource indicated by the resource set element #e1. Specifically, the UE randomly selects X beams (namely, X fourth beams) from the beams associated with the resource set element #e1, and selects, based on the X beams from RA resources indicated by the resource set element #e1, all or some of RA resources associated with the X beams as the target RA resources. (In other words, the target RA resource is selected based on rule 2.)

After the UE selects the target RA resource, the UE may perform Msg1 repetition based on the target RA resource. Specifically, the MAC in the UE indicates one of the X beams (and a corresponding RA resource) each time to the physical layer of the UE, so that the physical layer performs transmission of the Msg1 once based on the beam (and the corresponding RA resource).

Additionally, in a repetition transmission process of the Msg1, if a measured value of any SSB beam selected by the UE is less than or equal to (or not higher than) the first threshold, or a measured value of any CSI-RS beam selected by the UE is less than or equal to (or not higher than) the second threshold, the UE quits the current transmission of the first message. For example, the UE selects four (X = 4) beams in the second resource set element, namely, a beam SSB#0 (for performing transmission of the Msg1 once), a beam SSB#1 (for performing transmission of the Msg1 once), an SSB#2 (for performing transmission of the Msg1 once), and an SSB#3 (for performing transmission of the Msg1 once). Only RSRPs of the SSB#0 and the SSB#1 are higher than the first threshold. Therefore, the MAC entity sequentially indicates the SSB#0 (and a corresponding RA resource) to the physical layer for performing transmission of the Msg1 once, and then indicates the SSB#1 (and a corresponding RA resource) to the physical layer for performing transmission of the Msg1 once. Additionally, the UE does not indicate the SSB#2 or the SSB#2 to the physical layer for performing transmission of the Msg1.

Optionally, if the UE determines that the N first beams do not include a beam meeting any one of the foregoing conditions in example 1 to example 4, and the second RA resource is configured in the configuration information, the UE may perform a contention-based second RA procedure.

It may be understood that, in example 4, the preamble resource in the target RA resource may be a contention-free preamble resource, such as a preamble #60, indicated by a target preamble sequence index. A preamble resource indicated by the target preamble identifier is associated with a beam indicated by the target beam identifier. For example, the preamble resource is a preamble resource indicated by a resource set element associated with the target beam.

It should be noted that, in the foregoing examples 2, 3, and 4, beam types of the first beams associated with the same resource set element in the first resource set element list may be the same or different.

For example, when beam types of first beams associated with the same resource set element are the same, that is, a beam type associated with each resource set element is an SSB beam or a CSI-RS beam, if measured values of B1 SSB beams associated with one resource set element in the first resource set element list are greater than the first threshold, and B1 is a positive integer greater than or equal to the preset number, the UE considers that the resource set element is a first resource set element. Alternatively, if measured values of B2 CSI-RS beams associated with one resource set element in the first resource set element list are greater than the second threshold, and B2 is a positive integer greater than or equal to the preset number, the UE considers that the resource set element is a first resource set element.

The following describes the first rule in another possible implementation.

Optionally, in another possible implementation, it is assumed that the first RA resource is associated with N first beams, where N is a positive integer. In this case, the first rule may include at least one of rule 6 to rule 10.

Rule 6: If the first repetition transmission indication is configured in the configuration information, the UE selects all or some of RA resources associated with one of the N first beams as the target RA resource.

For example, the UE may randomly select one first beam from the N first beams, or randomly select one first beam from first beams meeting the first condition in the N first beams, or select one first beam based on the target beam identifier.

Rule 7: If a measured value of at least one first beam of the N first beams is greater than the beam selection threshold, the UE selects all or some of RA resources corresponding to one of the at least one first beam as the target RA resources.

Rule 8: If measured values of the N first beams are all less than or equal to the beam selection threshold, the UE uses all or some of RA resources corresponding to the second beam as the target RA resources.

The second beam may include one first beam randomly selected from the N first beams.

Optionally, in another possible implementation, the first rule may further include:

Rule 9: If the second repetition transmission indication is configured in the configuration information, and the second repetition transmission indication indicates the first beam pattern, the second repetition transmission indication is not used in the first RA procedure. Rule 9 may alternatively be written as follows: If the second repetition transmission indication indicates the first beam pattern, the second repetition transmission indication is not used in the first RA procedure. These two expressions have the same meaning and are interchangeable. This can ensure that the UE performs the first RA procedure based on the second beam pattern.

Optionally, in another possible implementation, the second repetition transmission indication indicating the first beam pattern may be used in the second RA procedure.

Optionally, rule 9 may be understood as at least one of the following: If the second repetition transmission indication indicates the first beam pattern, an indication value of the second repetition transmission indication is ignored in the first RA procedure;

if the second repetition transmission indication indicates the first beam pattern, the second repetition transmission indication indicates the second beam pattern by default; for example, it is agreed in advance that the UE performs the first RA procedure based on the second beam pattern.

Optionally, in the foregoing possible implementation and another possible implementation, the first rule may include the following rule 10 or rule 11:

Rule 10: In a case that the RA procedure with Msg1 repetition is triggered by a first PDCCH command, a first time difference is greater than or equal to first preset duration.

The first time difference is a time difference between a first reception time and a first sending time. The first reception time is a time at which the UE receives a last orthogonal frequency division multiple access OFDM symbol of the first PDCCH command. The first sending time is a time at which the UE sends a 1st OFDM symbol of a first random access occasion RO resource.

The first RO resource is a 1st RO resource that is selected by the UE for repetition transmission of the Msg1.

Optionally, the first preset duration may be determined based on at least one of the following:

i. physical uplink shared channel PUSCH preparation duration based on a UE capability and a subcarrier spacing (Sub Carrier Spacing, SCS);
ii. BWP switching processing duration;
iii. a delay determined based on a frequency range (Frequency Range, FR);
iiii. an uplink switching gap delay; or
iiiii. preparation duration required for measuring a beam in the RA procedure.

It should be noted that "the RA procedure with Msg1 repetition is triggered by a first PDCCH command" may be understood as follows: The configuration information is carried in the first PDCCH command. "The RA procedure with Msg1 repetition is triggered by a first RRC command" may be understood as follows: The configuration information is carried in the first RRC command.

Optionally, the foregoing first preset duration may be determined based on a sum of i to iiiii. Specifically, the foregoing first preset duration $T_{p1}$ may be expressed by formula 1:

$$T_{p1} = N_{T,2} + \Delta_{\text{BWPSwitching}} + \Delta_{\text{Delay}} + T_{\text{switch}} + T_{measurement}; \text{ formula } 1$$

In the formula, $T_{p1}$ is the first preset duration, $N_{T,2}$ is the PUSCH preparation duration based on a UE capability and a subcarrier spacing SCS, $\Delta_{\text{BWPSwitching}}$ is the BWP switching processing duration, $\Delta_{\text{Delay}}$ is the delay determined based on the FR, $T_{\text{switch}}$ is the switching gap delay, and $T_{measurement}$ is the preparation duration required for measuring a beam in the RA procedure.

In this way, when the RA procedure with Msg1 repetition is triggered by the first PDCCH command, the first time difference is greater than or equal to the first preset duration, thereby ensuring that the UE smoothly performs Msg1 repetition.

Rule 11: In the first RA procedure or the second RA procedure, after an ith RA attempt for Msg1 repetition, the UE completes, within second preset duration after a second reception time, selection of an RA resource used for an (i+1)th RA attempt for Msg1 repetition.

The second preset duration is determined based on at least preparation duration required for measuring a beam in the RA procedure.

The second reception time may include one of the following:

a time at which the UE receives a last OFDM symbol of a first RAR window;
a time at which the UE receives a last OFDM symbol of a target message window; or
a time at which the UE receives the last OFDM symbol of the first RAR window through a physical downlink shared channel PDSCH.

In this embodiment of this application, the first RAR window is an RAR window corresponding to the ith RA attempt for Msg1 repetition; and

the target message window is a message window of a third message corresponding to the ith RA attempt for Msg1 repetition, where i is a positive integer.

In this embodiment of this application, the "ith RA attempt for Msg1 repetition" may be understood as Msg1 repetition in the ith RA attempt; the "(i+1)th RA attempt for Msg1 repetition" may be understood as Msg1 repetition in the (i+1)th RA attempt.

Optionally, the second preset duration $T_{p2}$ may be determined based on formula 2:

$$T_{p2} = N_{T,1} + a1 + T_{measurement}; \text{ formula } 2$$

In the formula, $T_{p2}$ is the second preset duration, $N_{T,1}$ is the PUSCH preparation duration based on a UE capability and a subcarrier spacing SCS, $T_{measurement}$ is the preparation duration required for measuring a beam in the RA procedure, and a1 is constant duration, for example, a1 may be 0.75 ms.

In this way, in the first RA procedure or the second RA procedure, after an ith RA attempt for Msg1 repetition, the UE may complete, within second preset duration after a second reception time, selection of an RA resource used for an (i+1)th RA attempt for Msg1 repetition, thereby ensuring smooth Msg1 repetition.

In the RA method provided in this embodiment of this application, the UE may receive configuration information sent by the network side device, where the configuration information is used to configure an RA resource corresponding to an RA procedure with Msg1 repetition. In addition, the UE may perform Msg1 repetition based on the configuration information. According to this solution, the configuration information received by the UE is used to configure the RA resource corresponding to the RA procedure with Msg1 repetition, so that the UE can perform Msg1 repetition based on the configuration information, thereby improving a success rate of the random access procedure, and improving robustness of the random access procedure.

The RA method provided in this embodiment of this application may be performed by an RA apparatus. In the embodiments of this application, an example in which the RA apparatus performs the RA method is used to describe the RA apparatus provided in the embodiments of this application.

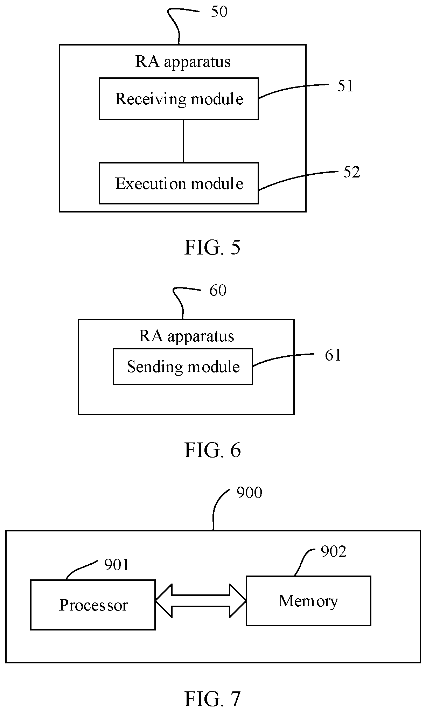

An embodiment of this application further provides an RA apparatus. FIG. 5 is a schematic structural diagram of an RA apparatus according to an embodiment of this application. As shown in FIG. 5, the RA apparatus 50 may include a receiving module 51 and an execution module 52.

The receiving module 51 is configured to receive configuration information sent by a network side device.

The execution module 52 is configured to perform Msg1 repetition based on the configuration information received by the receiving module 51, where the configuration information is used to configure at least one of the following:

a first RA resource corresponding to a contention-free first RA procedure with Msg1 repetition; or

a second RA resource corresponding to a contention-based second RA procedure with Msg1 repetition.

In a possible implementation, the configuration information includes at least one of the following: a beam selection threshold; a first repetition transmission indication; a second repetition transmission indication; a first resource set list of the first RA resource; a second resource set list of the second RA resource; a third repetition transmission indication; a target beam identifier; or a total number of repetition times of the Msg1.

In a possible implementation, the beam selection threshold is used for beam selection in the first RA procedure;

the first repetition transmission indication is used to indicate to trigger the first RA procedure;

the second repetition transmission indication is used to indicate a beam pattern of the Msg1 repetition;

each resource set list includes at least one resource set element, and each resource set element indicates at least one of the first RA resource or the second RA resource;

the third repetition transmission indication is used to indicate some resource set elements in the first resource set list or the second resource set list; and

the target beam identifier is used to indicate a target beam, and the target beam is associated with at least one of the first RA resource or the second RA resource.

In a possible implementation, the execution module 52 is specifically configured to: in a case that the UE considers that Msg1 repetition is applicable to a current random access procedure, or the first repetition transmission indication is configured in the configuration information, perform, by the UE, Msg1 repetition based on the configuration information.

In a possible implementation, the execution module 52 is specifically configured to perform Msg1 repetition based on the configuration information and a first rule.

In a possible implementation, the first RA resource is associated with N first beams, where N is a positive integer; the first rule includes at least one of the following:

if the second repetition transmission indication indicates a first beam pattern, and a number of second beams in the N first beams is greater than or equal to a preset number, the UE selects all or some of RA resources associated with X first beams in the N first beams as target RA resources; or

if the first resource set list is configured in the configuration information, and a number of third beams associated with each of the at least one first resource set element is greater than or equal to a preset number, the UE selects all or some of RA resources associated with X fourth beams associated with the second resource set element as target RA resources, where

the first beam pattern is that different times of repetition transmission are performed by using different beams;

the second beam is a first beam meeting the first condition in the N first beams;

the at least one first resource set element is a resource set element in the first resource set list;

the second resource set element is one of the at least one resource set element;

a third beam associated with each first resource set element is a first beam meeting the first condition in first beams that are associated with one first resource set element;

the first condition is that a measured value of a beam is greater than the beam selection threshold, where X is an integer greater than 1; and

the target RA resource is used to perform Msg1 repetition.

In a possible implementation, the at least one first resource set element is specifically a resource set element in a third resource set element; and

the third resource set element includes one of the following:

all resource set elements in the first resource set element list;

a resource set element determined from the first resource set list based on the target beam identifier; or

a resource set element determined from the first resource set list based on the third repetition transmission indication.

In a possible implementation, the beam selection threshold includes the first threshold and the second threshold, the first threshold is used for SSB beam selection in the first RA procedure, and the second threshold is used for CSI-RS beam selection in the first RA procedure; and

the first condition includes at least one of the following: a measured value of an SSB beam is greater than the first threshold; and a measured value of the CSI-RS beam is greater than the second threshold.

In a possible implementation, a value of the preset number is determined based on one of the following: a number threshold configured in the configuration information; a first preset proportion and a number of beams associated with the first RA resource; or a total number of repetition times of the Msg1.

In a possible implementation, X is determined based on one of the following: the number threshold configured in the configuration information; the preset number and a second preset proportion; or the total number of repetition times of the Msg1.

In a possible implementation, the first rule includes: if the first resource set list is configured in the configuration information, and a number of third beams associated with each of the at least one first resource set element is greater than or equal to a preset number, the UE selects all or some of RA resources associated with X fourth beams associated with the second resource set element as target RA resources; the first rule further includes:

in the first RA procedure, if a measured value of a fifth beam in the X fourth beams is less than or equal to the beam selection threshold, the UE quits transmitting, based on an RA resource associated with the fifth beam in the target RA resources, the first message.

In a possible implementation, the second RA resource is associated with Q sixth beams, where Q is a positive integer; and

the first rule further includes: if the second repetition transmission indication indicates the first beam pattern, the number of the second beams in the N first beams is less than the preset number, and the second RA resource is configured in the configuration information; or if the first resource set list and the second RA resource are configured in the configuration information, and a number of seventh beams associated with each of a third resource set element is less than the preset number, the UE selects all or some of RA resources associated with X sixth beams in the Q sixth beams as the target RA resources, where

the third resource set element includes one of the following: all resource set elements in the first resource set element list; a resource set element determined from the first resource set list based on the target beam identifier; or a resource set element determined from the first resource set list based on the third repetition transmission indication, where the seventh beam associated with each of the third resource set element is a first beam meeting the first condition in first beams that are associated with one of the third resource set element.

In a possible implementation, the first rule includes: if the second repetition transmission indication is configured in the configuration information, and the second repetition transmission indication indicates the first beam pattern, the second repetition transmission indication is not used in the first RA procedure.

In a possible implementation, the first rule includes:

in a case that the RA procedure with Msg1 repetition is triggered by a first downlink physical control channel PDCCH command, a first time difference is greater than or equal to first preset duration, where

the first time difference is a time difference between a first reception time and a first sending time;

the first reception time is a time at which the UE receives a last orthogonal frequency division multiple access OFDM symbol of the first PDCCH command;

the first sending time is a time at which the UE sends a 1st OFDM symbol of a first random access occasion RO resource, where the first RO resource is a 1st RO resource that is selected by the UE for Msg1 repetition; and

the first preset duration is determined based on at least one of the following: physical uplink shared channel PUSCH preparation duration based on a UE capability and a subcarrier spacing SCS; BWP switching processing duration; a delay determined based on a frequency range FR;

an uplink switching gap delay; or preparation duration required for measuring a beam in the RA procedure.

In a possible implementation, the first rule includes:

in the first RA procedure or the second RA procedure, after an ith RA attempt for Msg1 repetition, the UE completes, within second preset duration after a second reception time, selection of an RA resource used for an (i+1)th RA attempt for Msg1 repetition; and the second reception time includes one of the following:

a time at which the UE receives a last OFDM symbol of a first random access response RAR window;

a time at which the UE receives a last OFDM symbol of a target message window; or

a time at which the UE receives the last OFDM symbol of the first RAR window through a physical downlink shared channel PDSCH, where

the second preset duration is determined based on at least preparation duration required for measuring a beam in the RA procedure;

the first RAR window is an RAR window corresponding to the ith RA attempt for Msg1 repetition; and

the target message window is a message window of a third message corresponding to the ith RA attempt for Msg1 repetition, where i is a positive integer.

In the RA method provided in this embodiment of this application, the RA apparatus may receive configuration information sent by the network side device, where the configuration information is used to configure an RA resource corresponding to an RA procedure with Msg1 repetition. In addition, the RA apparatus may perform Msg1 repetition based on the configuration information. According to this solution, the configuration information received by the RA apparatus is used to configure the RA resource corresponding to the RA procedure with Msg1 repetition, so that the RA apparatus can perform Msg1 repetition based on the configuration information, thereby improving a success rate of the random access procedure, and improving robustness of the random access procedure.

The RA apparatus in this embodiment of this application may be an electronic device, for example, an electronic device with an operating system, or may be a component such as an integrated circuit or a chip in the electronic device. The electronic device may be a terminal, or may be another device other than the terminal. For example, the terminal may include but is not limited to the types of the terminal 11 that are listed above. The another device may be a server, a network attached storage (Network Attached Storage, NAS), or the like. This is not specifically limited in this embodiment of this application.

An embodiment of this application further provides an RA apparatus. FIG. 6 is a schematic structural diagram of an RA apparatus according to an embodiment of this application. As shown in FIG. 6, the RA apparatus 60 may include a sending module 61. The sending module 61 is configured to send configuration information to UE, where the configuration information is used by the UE to perform Msg1 repetition; and
the configuration information is used to configure at least one of the following:

a first RA resource corresponding to a contention-free first RA procedure with Msg1 repetition; or
a second RA resource corresponding to a contention-based second RA procedure with Msg1 repetition.

In a possible implementation, the configuration information includes at least one of the following: a beam selection threshold; a first repetition transmission indication;

a second repetition transmission indication; a first resource set list of the first RA resource; a second resource set list of the second RA resource;
a third repetition transmission indication; a target beam identifier; or a total number of repetition times of the Msg1.

In a possible implementation, the beam selection threshold is used for beam selection in the first RA procedure;

the first repetition transmission indication is used to indicate to trigger the first RA procedure;
the second repetition transmission indication is used to indicate a beam pattern of the Msg1for repetition;
each resource set list includes at least one resource set element, and each resource set element indicates at least one of the first RA resource or the second RA resource;
the third repetition transmission indication is used to indicate some resource set elements in the first resource set list or the second resource set list; and
the target beam identifier is used to indicate a target beam, and the target beam is associated with at least one of the first RA resource or the second RA resource.

In a possible implementation, the sending module 61 is specifically configured to send the configuration information to the UE based on a constraint condition; and
the constraint condition includes:

the first RA resource and the second repetition transmission indication indicating a second beam pattern are not simultaneously configured, where
the second beam pattern is that different times of repetition transmission are performed by using a same beam.

According to the RA apparatus provided in this embodiment of this application, the RA apparatus may send configuration information to the UE, where the configuration information is used to configure an RA resource corresponding to an RA procedure with Msg1 repetition, and the configuration information is used by the UE to perform Msg1 repetition. According to this solution, the RA apparatus may configure, by using the configuration information, the RA resource corresponding to the RA procedure with Msg1 repetition, so that the UE can perform Msg1 repetition based on the configuration information, thereby improving a success rate of the random access procedure, and improving robustness of the random access procedure.

The RA apparatus in this embodiment of this application may be an electronic device, for example, an electronic device with an operating system, or may be a component such as an integrated circuit or a chip in the electronic device. The electronic device may be a terminal, or may be another device other than the terminal. For example, the terminal may include but is not limited to the types of the terminal 11 that are listed above. The another device may be a server, a network attached storage (Network Attached Storage, NAS), or the like. This is not specifically limited in this embodiment of this application.

The RA apparatus provided in this embodiment of this application can implement processes implemented in the method embodiment of FIG. 4, and achieve same technical effects. To avoid repetition, details are not described herein again.

Optionally, as shown in FIG. 7, an embodiment of this application further provides UE 900, including a processor 901 and a memory 902. The memory 902 stores a program or instructions capable of running on the processor 901. For example, when the UE 900 is a terminal, the program or instructions are executed by the processor 901 to implement the steps in the foregoing RA method embodiment, and same technical effects can be achieved. When the UE 900 is a network side device, the program or instructions are executed by the processor 901 to implement the steps in the foregoing RA method embodiment, and same technical effects can be achieved. To avoid repetition, details are not described herein again.

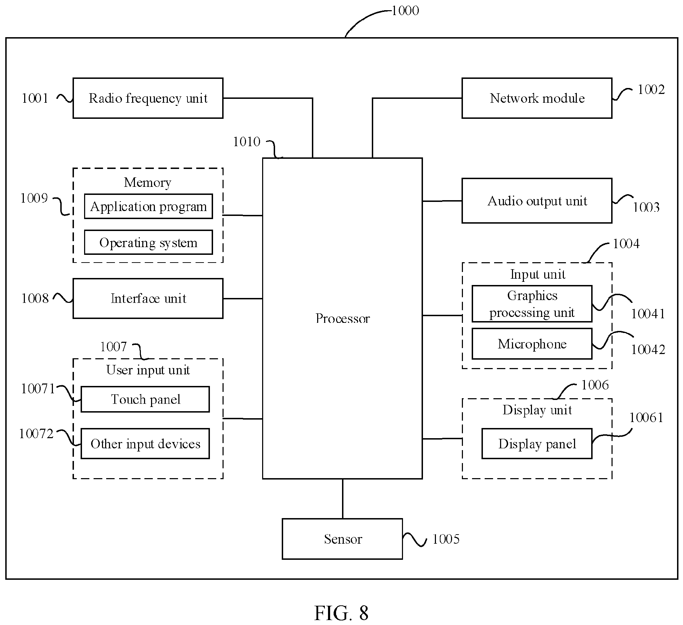

An embodiment of this application further provides UE, where the UE includes a processor and a communication interface, the communication interface is configured to receive configuration information sent by a network side device, and the configuration information is used to configure at least one of the following: an RA resource corresponding to an RA procedure with Msg1 repetition, and a second RA resource corresponding to a contention-based second RA procedure with Msg1 repetition; or the processor is configured to perform Msg1 repetition based on the configuration information, where a first RA resource corresponding to a contention-free first RA procedure with Msg1 repetition. The UE embodiment corresponds to the foregoing UE-side method embodiment. Each implementation process and implementation of the foregoing method embodiment are applicable to the UE embodiment, and same technical effects can be achieved. Specifically, FIG. 8 is a schematic diagram of a hardware structure of UE according to an embodiment of this application.

The terminal 1000 includes but is not limited to at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) that supplies power to the components, and the power supply may be logically connected to the processor 1010 by using a power management system, to implement functions such as charging management, discharging management, and power consumption management by using the power management system. The structure of the terminal shown in FIG. 8 does not constitute a limitation on the terminal. The terminal may include more or fewer components than those shown in the figure, or combine some components, or have a different component arrangement. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a still picture or a video obtained by an image capturing apparatus (for example, a camera) in a video capturing mode or an image capturing mode. The display unit 1006 may include a display panel 10061, and the display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (for example, a volume control key or an on/off key), a trackball, a mouse, and a joystick. Details are not described herein.

In this embodiment of this application, after receiving downlink data from a network side device, the radio frequency unit 1001 may transmit the downlink data to the processor 1010 for processing. In addition, the radio frequency unit 1001 may send uplink data to the network side device. Generally, the radio frequency unit 1001 includes but is not limited to an antenna, an amplifier, a transceiver, a coupler, a low noise amplifier, a duplexer, and the like.

The memory 1009 may be configured to store a software program or instructions, and various types of data. The memory 1009 may mainly include a first storage area for storing a program or instructions and a second storage area for storing data. The first storage area may store an operating system, an application program or instructions required by at least one function (for example, a sound playing function or an image playing function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DR RAM). The memory 1009 in this embodiment of this application includes but is not limited to these and any other memories of proper types.

The processor 1010 may include one or more processing units. Optionally, an application processor and a modem processor are integrated into the processor 1010. The application processor mainly processes operations involving an operating system, a user interface, an application program, and the like. The modem processor mainly processes a wireless communication signal, for example, a baseband processor. It may be understood that the foregoing modem processor may alternatively not be integrated into the processor 1010.

The radio frequency unit 1001 is configured to receive configuration information sent by a network side device.

The processor 1010 is configured to perform Msg1 repetition based on the configuration information received by the radio frequency unit 1001, where the configuration information is used to configure at least one of the following:

a first RA resource corresponding to a contention-free first RA procedure with Msg1 repetition; or
a second RA resource corresponding to a contention-based second RA procedure with Msg1 repetition.

In a possible implementation, the configuration information includes at least one of the following: a beam selection threshold; a first repetition transmission indication;

a second repetition transmission indication; a first resource set list of the first RA resource; a second resource set list of the second RA resource;
a third repetition transmission indication; a target beam identifier; or a total number of repetition times of the Msg1.

In a possible implementation, the beam selection threshold is used for beam selection in the first RA procedure;

the first repetition transmission indication is used to indicate to trigger the first RA procedure;
the second repetition transmission indication is used to indicate a beam pattern of the Msg1 for repetition;
each resource set list includes at least one resource set element, and each resource set element indicates at least one of the first RA resource or the second RA resource;
the third repetition transmission indication is used to indicate some resource set elements in the first resource set list or the second resource set list; and
the target beam identifier is used to indicate a target beam, and the target beam is associated with at least one of the first RA resource or the second RA resource.

In a possible implementation, the processor 1010 is specifically configured to: in a case that the UE considers that Msg1 repetition is applicable to a current random access procedure, or the first repetition transmission indication is configured in the configuration information, perform, by the UE, Msg1 repetition based on the configuration information.

In a possible implementation, the processor 1010 is specifically configured to perform Msg1 repetition based on the configuration information and a first rule.

In a possible implementation, the first RA resource is associated with N first beams, where N is a positive integer; the first rule includes at least one of the following:

if the second repetition transmission indication indicates a first beam pattern, and a number of second beams in the N first beams is greater than or equal to a preset number, the UE selects all or some of RA resources associated with X first beams in the N first beams as target RA resources; or
if the first resource set list is configured in the configuration information, and a number of third beams associated with each of the at least one first resource set element is greater than or equal to a preset number, the UE selects all or some of RA resources associated with X fourth beams associated with the second resource set element as target RA resources, where
the first beam pattern is that different times of repetition transmission are performed by using different beams;
the second beam is a first beam meeting the first condition in the N first beams;
the at least one first resource set element is a resource set element in the first resource set list;
the second resource set element is one of the at least one resource set element;
a third beam associated with each first resource set element is a first beam meeting the first condition in first beams that are associated with one first resource set element;
the first condition is that a measured value of a beam is greater than the beam selection threshold, where X is an integer greater than 1; and
the target RA resource is used to perform Msg1 repetition.

In a possible implementation, the at least one first resource set element is specifically a resource set element in a third resource set element; and
the third resource set element includes one of the following:

all resource set elements in the first resource set element list;
a resource set element determined from the first resource set list based on the target beam identifier; or
a resource set element determined from the first resource set list based on the third repetition transmission indication.

In a possible implementation, the beam selection threshold includes a first threshold and a second threshold;

the first threshold is used for SSB beam selection in the first RA procedure, and the second threshold is used for CSI-RS beam selection in the first RA procedure; and
the first condition includes at least one of the following: a measured value of an SSB beam is greater than the first threshold; and a measured value of the CSI-RS beam is greater than the second threshold.

In a possible implementation, a value of the preset number is determined based on one of the following: a number threshold configured in the configuration information; a first preset proportion and a number of beams associated with the first RA resource; or a total number of repetition times of the Msg1.

In a possible implementation, X is determined based on one of the following: the number threshold configured in the configuration information; the preset number and a second preset proportion; or the total number of repetition times of the Msg1.

In a possible implementation, the first rule includes: if the first resource set list is configured in the configuration information, and a number of third beams associated with each of the at least one first resource set element is greater than or equal to a preset number, the UE selects all or some of RA resources associated with X fourth beams associated with the second resource set element as target RA resources;

the first rule further includes:
in the first RA procedure, if a measured value of a fifth beam in the X fourth beams is less than or equal to the beam selection threshold, the UE quits transmitting, based on an RA resource associated with the fifth beam in the target RA resources, the first message.

In a possible implementation, the second RA resource is associated with Q sixth beams, where Q is a positive integer; and
the first rule further includes:

if the second repetition transmission indication indicates the first beam pattern, the number of the second beams in the N first beams is less than the preset number, and the second RA resource is configured in the configuration information; or if the first resource set list and the second RA resource are configured in the configuration information, and a number of seventh beams associated with each of a third resource set element is less than the preset number, the UE selects all or some of RA resources associated with X sixth beams in the Q sixth beams as the target RA resources, where
the third resource set element includes one of the following:

all resource set elements in the first resource set element list;
a resource set element determined from the first resource set list based on the target beam identifier; or
a resource set element determined from the first resource set list based on the third repetition transmission indication, where
the seventh beam associated with each of the third resource set element is a first beam meeting the first condition in first beams that are associated with one of the third resource set element.

In a possible implementation, the first rule includes:
if the second repetition transmission indication is configured in the configuration information, and the second repetition transmission indication indicates the first beam pattern, the second repetition transmission indication is not used in the first RA procedure.

In a possible implementation, the first rule includes:

in a case that the RA procedure with Msg1 repetition is triggered by a first downlink physical control channel PDCCH command, a first time difference is greater than or equal to first preset duration, where
the first time difference is a time difference between a first reception time and a first sending time;
the first reception time is a time at which the UE receives a last orthogonal frequency division multiple access OFDM symbol of the first PDCCH command;

the first sending time is a time at which the UE sends a 1st OFDM symbol of a first random access occasion RO resource, where the first RO resource is a 1st RO resource that is selected by the UE for Msg1 repetition; and the first preset duration is determined based on at least one of the following:

physical uplink shared channel PUSCH preparation duration based on a UE capability and a subcarrier spacing SCS;
BWP switching processing duration;
a delay determined based on a frequency range FR;
an uplink switching gap delay; or
preparation duration required for measuring a beam in the RA procedure.

In a possible implementation, the first rule includes:

in the first RA procedure or the second RA procedure, after an ith RA attempt for Msg1 repetition, the UE completes, within second preset duration after a second reception time, selection of an RA resource used for an (i+1)th RA attempt for Msg1 repetition; and
the second reception time includes one of the following:

a time at which the UE receives a last OFDM symbol of a first random access response RAR window;
a time at which the UE receives a last OFDM symbol of a target message window; or
a time at which the UE receives the last OFDM symbol of the first RAR window through a physical downlink shared channel PDSCH, where
the second preset duration is determined based on at least preparation duration required for measuring a beam in the RA procedure;
the first RAR window is an RAR window corresponding to the ith RA attempt for Msg1 repetition; and
the target message window is a message window of a third message corresponding to the ith RA attempt for Msg1 repetition, where i is a positive integer.

According to the UE provided in this embodiment of this application, the UE may receive configuration information sent by the network side device, where the configuration information is used to configure an RA resource corresponding to an RA procedure with Msg1 repetition. In addition, the UE may perform Msg1 repetition based on the configuration information. According to this solution, the configuration information received by the UE is used to configure the RA resource corresponding to the RA procedure with Msg1 repetition, so that the UE can perform Msg1 repetition based on the configuration information, thereby improving a success rate of the random access procedure, and improving robustness of the random access procedure.

An embodiment of this application further provides a network side device, where the network side device includes a processor and a communication interface, the communication interface is configured to send configuration information to UE, and the configuration information is used to configure at least one of the following: a first RA resource corresponding to a contention-free first RA procedure with Msg1 repetition, and a second RA resource corresponding to a contention-based second RA procedure with Msg1 repetition, where the configuration information is used by the UE to perform Msg1 repetition. The network side device embodiment corresponds to the foregoing method embodiment for the network side device. Each implementation process and implementation of the foregoing method embodiment are applicable to the network side device embodiment, and same technical effects can be achieved.

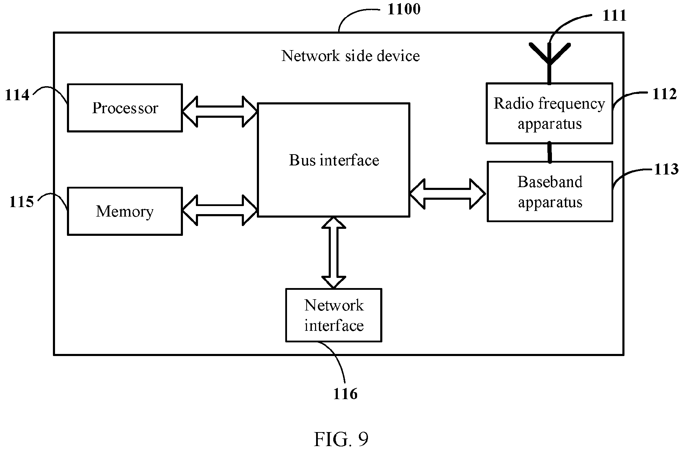

Specifically, an embodiment of this application further provides a network side device. As shown in FIG. 9, the network side device 1100 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information through the antenna 111, and sends the received information to the baseband apparatus 113 for processing. In a downlink direction, the baseband apparatus 113 processes to-be-sent information, and sends processed information to the radio frequency apparatus 112. After processing the received information, the radio frequency apparatus 112 sends processed information through the antenna 111.

The radio frequency apparatus 112 is configured to send configuration information to UE, where the configuration information is used by the UE to perform Msg1 repetition.

The configuration information is used to configure at least one of the following: a first RA resource corresponding to a contention-free first RA procedure with Msg1 repetition, and a second RA resource corresponding to a contention-based second RA procedure with Msg1 repetition.

In a possible implementation, the configuration information includes at least one of the following: a beam selection threshold; a first repetition transmission indication; a second repetition transmission indication; a first resource set list of the first RA resource; a second resource set list of the second RA resource; a third repetition transmission indication; a target beam identifier; or a total number of repetition times of the Msg1.

In a possible implementation, the beam selection threshold is used for beam selection in the first RA procedure; the first repetition transmission indication is used to indicate to trigger the first RA procedure; the second repetition transmission indication is used to indicate a beam pattern of the Msg1for repetition; each resource set list includes at least one resource set element, and each resource set element indicates at least one of the first RA resource or the second RA resource; the third repetition transmission indication is used to indicate some resource set elements in the first resource set list or the second resource set list; and the target beam identifier is used to indicate a target beam, and the target beam is associated with at least one of the first RA resource or the second RA resource.

In a possible implementation, the radio frequency apparatus 112 is specifically configured to send the configuration information to the UE based on a constraint condition; the constraint condition includes: the first RA resource and the second repetition transmission indication indicating a second beam pattern are not simultaneously configured, where the second beam pattern is that different times of repetition transmission are performed by using a same beam.

According to the network side device provided in this embodiment of this application, the network side device may send configuration information to the UE, where the configuration information is used to configure an RA resource corresponding to an RA procedure with Msg1 repetition, and the configuration information is used by the UE to perform Msg1 repetition. According to this solution, the network side device may configure, by using the configuration information, the RA resource corresponding to the RA procedure with Msg1 repetition, so that the UE can perform Msg1 repetition based on the configuration information, thereby improving a success rate of the random access procedure, and improving robustness of the random access procedure.

In the foregoing embodiment, the method performed by the network side device may be implemented in the baseband apparatus 113. The baseband apparatus 113 includes a baseband processor.

For example, the baseband apparatus 113 may include at least one baseband board. A plurality of chips are disposed on the baseband board. As shown in FIG. 9, one of the chips is, for example, the baseband processor, and is connected to the memory 115 through a bus interface, to invoke a program in the memory 115 to perform the operations of the network device shown in the foregoing method embodiments.

The network side device may further include a network interface 116, and the interface is, for example, a common public radio interface (common public radio interface, CPRI).

Specifically, the network side device 1100 in this embodiment of the present invention further includes instructions or a program that is stored in the memory 115 and that is capable of running on the processor 114. The processor 114 invokes the instructions or program in the memory 115 to perform the method performed by the modules shown in FIG. 6, and same technical effects are achieved. To avoid repetition, details are not described herein again.

An embodiment of this application further provides a readable storage medium, where the readable storage medium stores a program or instructions, the program or instructions are executed by a processor to implement the processes in the foregoing RA method embodiment, and same technical effects can be achieved. To avoid repetition, details are not described herein again.

The processor is a processor in the terminal in the foregoing embodiments. The readable storage medium may be non-volatile, or may be non-transitory. The readable storage medium may include a computer-readable storage medium, such as a computer read-only memory ROM, a random access memory RAM, a magnetic disk, or an optical disc.

An embodiment of this application further provides a chip, where the chip includes a processor and a communication interface, the communication interface is coupled to the processor, the processor is configured to run a program or instructions to implement the processes in the foregoing RA method embodiment, and same technical effects can be achieved. To avoid repetition, details are not described herein again.

It should be understood that the chip mentioned in this embodiment of this application may also be referred to as a system on chip, a system chip, a chip system, a system-on-a-chip, or the like.

An embodiment of this application further provides a computer program/program product, where the computer program/program product is stored in a storage medium, the computer program/program product is executed by at least one processor to implement the processes in the foregoing RA method embodiment, and same technical effects can be achieved. To avoid repetition, details are not described herein again.

An embodiment of this application further provides a communication system, where the communication system includes UE and a network side device, the UE may be configured to perform the steps performed by the UE in the foregoing RA method embodiment, and the network side device may be configured to perform the steps performed by the network side device in the foregoing RA method.

It should be noted that, in this specification, the terms "include", "comprise", or any other variants thereof are intended to cover a non-exclusive inclusion, so that a process, a method, an article, or an apparatus that includes a list of elements not only includes those elements but also includes other elements that are not expressly listed, or further includes elements inherent to such a process, a method, an article, or an apparatus. Without more constraints, an element defined by the phrase "including a ..." does not preclude the existence of additional identical elements in the process, method, article, or apparatus that includes the element. In addition, it should be noted that functions in the method and the apparatus in the implementations of this application are not limited to being performed in an illustrated order or a discussed order, and the involved functions may be performed basically simultaneously or in reverse order. For example, the described method may be performed in a different order than the described order. In addition, various steps may be further added, omitted, or combined. In addition, features described with reference to some examples may be combined in other examples.

According to the foregoing descriptions of the implementations, a person skilled in the art may clearly understand that the method in the foregoing embodiments may be implemented by using software and a necessary universal hardware platform, or certainly may be implemented by using hardware. However, in many cases, the former is a better implementation. Based on such an understanding, the technical solutions of this application essentially or the part contributing to the related technology may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are merely examples but not limitations. A person of ordinary skill in the art may further make many variations under the teachings of this application without departing from the objective of this application and the protection scope of the claims, and such variations shall all fall within the protection scope of this application.

**Claims**

1. A random access RA method, comprising:

   receiving, by a user equipment UE, configuration information sent by a network side device; and
   performing, by the UE, Msg1 repetition based on the configuration information, wherein the configuration information is used to configure at least one of the following:

   a first RA resource corresponding to a contention-free first RA procedure with Msg1 repetition; or
   a second RA resource corresponding to a contention-based second RA procedure with Msg1 repetition.

2. The method according to claim 1, wherein the configuration information comprises at least one of the following:

   a beam selection threshold;
   a first repetition transmission indication;
   a second repetition transmission indication;
   a first resource set list of the first RA resource;
   a second resource set list of the second RA resource;
   a third repetition transmission indication;
   a target beam identifier; or
   a total number of repetition times of the Msg1.

3. The method according to claim 2, wherein

   the beam selection threshold is used for beam selection in the first RA procedure;
   the first repetition transmission indication is used to indicate to trigger the first RA procedure with Msg1 repetition;
   the second repetition transmission indication is used to indicate a beam pattern of the Msg1 repetition;
   each resource set list comprises at least one resource set element, and each resource set element indicates at least one of the first RA resource or the second RA resource;
   the third repetition transmission indication is used to indicate some resource set elements in the first resource set list or the second resource set list; and
   the target beam identifier is used to indicate a target beam, and the target beam is associated with at least one of the first RA resource or the second RA resource.

4. The method according to claim 3, wherein the performing, by the UE, Msg1 repetition based on the configuration information comprises:
   in a case that the UE considers that Msg1 repetition is applicable to a current random access procedure, or the first repetition transmission indication is configured in the configuration information, performing, by the UE, Msg1 repetition based on the configuration information.

5. The method according to claim 4, wherein the performing, by the UE, Msg1 repetition based on the configuration information comprises:
performing, by the UE, Msg1 repetition based on the configuration information and a first rule.

6. The method according to claim 5, wherein

the first RA resource is associated with N first beams, wherein N is a positive integer;
the first rule comprises at least one of the following:

if the second repetition transmission indication indicates a first beam pattern, and a number of second beams in the N first beams is greater than or equal to a preset number, the UE selects all or some of RA resources associated with X first beams in the N first beams as target RA resources; or
if the first resource set list is configured in the configuration information, and a number of third beams associated with each of the at least one first resource set element is greater than or equal to a preset number, the UE selects all or some of RA resources associated with X fourth beams associated with the second resource set element as target RA resources, wherein
the first beam pattern is that different times of repetition transmission are performed by using different beams;
the second beam is a first beam meeting a first condition in the N first beams;
the at least one first resource set element is a resource set element in the first resource set list;
the second resource set element is one of the at least one resource set element;
a third beam associated with each first resource set element is a first beam meeting the first condition in first beams that are associated with one first resource set element;
the first condition is that a measured value of a beam is greater than the beam selection threshold, wherein X is an integer greater than 1; and
the target RA resource is used to perform Msg1 repetition.

7. The method according to claim 6, wherein the at least one first resource set element is specifically a resource set element in a third resource set element; and
the third resource set element comprises one of the following:

all resource set elements in the first resource set element list;
a resource set element determined from the first resource set list based on the target beam identifier; or
a resource set element determined from the first resource set list based on the third repetition transmission indication.

8. The method according to claim 6, wherein the beam selection threshold comprises a first threshold and a second threshold;

the first threshold is used for SSB beam selection in the first RA procedure, and the second threshold is used for CSI-RS beam selection in the first RA procedure; and
the first condition comprises at least one of the following:

a measured value of an SSB beam is greater than the first threshold; or
a measured value of a CSI-RS beam is greater than the second threshold.

9. The method according to claim 6, wherein
a value of the preset number is determined based on one of the following:

a number threshold configured in the configuration information;
a first preset proportion and a number of beams associated with the first RA resource; or
a total number of repetition times of the Msg1.

10. The method according to claim 6, wherein
X is determined based on one of the following:

a number threshold configured in the configuration information;

the preset number and a second preset proportion; or
a total number of repetition times of the Msg1.

**11.** The method according to claim 6, wherein

the first rule comprises: if the first resource set list is configured in the configuration information, and a number of third beams associated with each of the at least one first resource set element is greater than or equal to a preset number, the UE selects all or some of RA resources associated with X fourth beams associated with the second resource set element as target RA resources;
the first rule further comprises:
in the first RA procedure, if a measured value of a fifth beam in the X fourth beams is less than or equal to the beam selection threshold, the UE quits transmitting, based on an RA resource associated with the fifth beam in the target RA resources, the first message.

**12.** The method according to claim 6, wherein the second RA resource is associated with Q sixth beams, wherein Q is a positive integer; and
the first rule further comprises:

if the second repetition transmission indication indicates the first beam pattern, the number of the second beams in the N first beams is less than the preset number, and the second RA resource is configured in the configuration information; or if the first resource set list and the second RA resource are configured in the configuration information, and a number of seventh beams associated with each of a third resource set element is less than the preset number, the UE selects all or some of RA resources associated with X sixth beams in the Q sixth beams as the target RA resources, wherein
the third resource set element comprises one of the following:

all resource set elements in the first resource set element list;
a resource set element determined from the first resource set list based on the target beam identifier; or
a resource set element determined from the first resource set list based on the third repetition transmission indication, wherein
the seventh beam associated with each of the third resource set element is a first beam meeting the first condition in first beams that are associated with one of the third resource set element.

**13.** The method according to claim 5, wherein the first rule comprises:
if the second repetition transmission indication is configured in the configuration information, and the second repetition transmission indication indicates the first beam pattern, the second repetition transmission indication is not used in the first RA procedure.

**14.** The method according to claim 5, wherein
the first rule comprises:

in a case that an RA procedure with Msgl repetition is triggered by a first downlink physical control channel PDCCH command, a first time difference is greater than or equal to first preset duration, wherein
the first time difference is a time difference between a first reception time and a first sending time;
the first reception time is a time at which the UE receives a last orthogonal frequency division multiple access OFDM symbol of the first PDCCH command;
the first sending time is a time at which the UE sends a 1st OFDM symbol of a first random access occasion RO resource, wherein the first RO resource is a 1st RO resource that is selected by the UE for Msgl repetition; and
the first preset duration is determined based on at least one of the following:

physical uplink shared channel PUSCH preparation duration based on a UE capability and a subcarrier spacing SCS;
BWP switching processing duration;
a delay determined based on a frequency range FR;
an uplink switching gap delay; or
preparation duration required for measuring a beam in the RA procedure.

**15.** The method according to claim 5, wherein

the first rule comprises:

in the first RA procedure or the second RA procedure, after an ith RA attempt for Msgl repetition, the UE completes, within second preset duration after a second reception time, selection of an RA resource used for an (i+1)th RA attempt for Msgl repetition; and
the second reception time comprises one of the following:

a time at which the UE receives a last OFDM symbol of a first random access response RAR window;
a time at which the UE receives a last OFDM symbol of a target message window; or
a time at which the UE receives the last OFDM symbol of the first RAR window through a physical downlink shared channel PDSCH, wherein
the second preset duration is determined based on at least preparation duration required for measuring a beam in an RA procedure;
the first RAR window is an RAR window corresponding to the ith RA attempt for Msgl repetition; and
the target message window is a message window of a third message corresponding to the ith RA attempt for Msgl repetition, wherein i is a positive integer.

16. An RA method, comprising:

sending, by a network side device, configuration information to a UE, wherein
the configuration information is used by the UE to perform Msgl repetition; and
the configuration information is used to configure at least one of the following:

a first RA resource corresponding to a contention-free first RA procedure with Msgl repetition; or
a second RA resource corresponding to a contention-based second RA procedure with Msgl repetition.

17. The method according to claim 16, wherein the configuration information comprises at least one of the following:

a beam selection threshold;
a first repetition transmission indication;
a second repetition transmission indication;
a first resource set list of the first RA resource;
a second resource set list of the second RA resource;
a third repetition transmission indication;
a target beam identifier; or
a total number of repetition times of the Msg1.

18. The method according to claim 17, wherein the beam selection threshold is used for beam selection in the first RA procedure;

the first repetition transmission indication is used to indicate to trigger the first RA procedure;
the second repetition transmission indication is used to indicate a beam pattern of the Msgl repetition;
each resource set list comprises at least one resource set element, and each resource set element indicates at least one of the first RA resource or the second RA resource;
the third repetition transmission indication is used to indicate some resource set elements in the first resource set list or the second resource set list; and
the target beam identifier is used to indicate a target beam, and the target beam is associated with at least one of the first RA resource or the second RA resource.

19. The method according to claim 16, wherein the sending, by a network side device, configuration information to a UE comprises:

sending, by the network side device, the configuration information to the UE based on a constraint condition, wherein
the constraint condition comprises:

the first RA resource and the second repetition transmission indication indicating a second beam pattern are not simultaneously configured, wherein

the second beam pattern is that different times of repetition transmission are performed by using a same beam.

20. An RA apparatus, comprising: the apparatus comprises: a receiving module and an execution module, wherein

the receiving module is configured to receive configuration information sent by a network side device; and
the execution module is configured to perform Msgl repetition based on the configuration information received by the receiving module, wherein the configuration information is used to configure at least one of the following:

a first RA resource corresponding to a contention-free first RA procedure with Msgl repetition; or
a second RA resource corresponding to a contention-based second RA procedure with Msgl repetition.

21. The apparatus according to claim 1, wherein the configuration information comprises at least one of the following:

a beam selection threshold;
a first repetition transmission indication;
a second repetition transmission indication;
a first resource set list of the first RA resource;
a second resource set list of the second RA resource;
a third repetition transmission indication;
a target beam identifier; or
a total number of repetition times of the Msg1.

22. The apparatus according to claim 21, wherein

the beam selection threshold is used for beam selection in the first RA procedure;
the first repetition transmission indication is used to indicate to trigger the first RA procedure;
the second repetition transmission indication is used to indicate a beam pattern of the Msgl repetition;
each resource set list comprises at least one resource set element, and each resource set element indicates at least one of the first RA resource or the second RA resource;
the third repetition transmission indication is used to indicate some resource set elements in the first resource set list or the second resource set list; and
the target beam identifier is used to indicate a target beam, and the target beam is associated with at least one of the first RA resource or the second RA resource.

23. The apparatus according to claim 22, wherein
the execution module is specifically configured to: in a case that the UE considers that Msgl repetition is applicable to a current random access procedure, or the first repetition transmission indication is configured in the configuration information, perform, by the UE, Msgl repetition based on the configuration information.

24. The apparatus according to claim 23, wherein the execution module is specifically configured to perform Msgl repetition based on the configuration information and a first rule.

25. The apparatus according to claim 24, wherein

the first RA resource is associated with N first beams, wherein N is a positive integer;
the first rule comprises at least one of the following:

if the second repetition transmission indication indicates a first beam pattern, and a number of second beams in the N first beams is greater than or equal to a preset number, the UE selects all or some of RA resources associated with X first beams in the N first beams as target RA resources; or
if the first resource set list is configured in the configuration information, and a number of third beams associated with each of the at least one first resource set element is greater than or equal to a preset number, the UE selects all or some of RA resources associated with X fourth beams associated with the second resource set element as target RA resources, wherein
the first beam pattern is that different times of repetition transmission are performed by using different beams;
the second beam is a first beam meeting the first condition in the N first beams;
the at least one first resource set element is a resource set element in the first resource set list;

the second resource set element is one of the at least one resource set element;

a third beam associated with each first resource set element is a first beam meeting the first condition in first beams that are associated with one first resource set element;

the first condition is that a measured value of a beam is greater than the beam selection threshold, wherein X is an integer greater than 1; and

the target RA resource is used to perform Msgl repetition.

26. The apparatus according to claim 25, wherein the at least one first resource set element is specifically a resource set element in a third resource set element; and

the third resource set element comprises one of the following:

all resource set elements in the first resource set element list;

a resource set element determined from the first resource set list based on the target beam identifier; or

a resource set element determined from the first resource set list based on the third repetition transmission indication.

27. The apparatus according to claim 25, wherein the beam selection threshold comprises a first threshold and a second threshold;

the first threshold is used for SSB beam selection in the first RA procedure, and the second threshold is used for CSI-RS beam selection in the first RA procedure; and

the first condition comprises at least one of the following:

a measured value of an SSB beam is greater than the first threshold; or

a measured value of a CSI-RS beam is greater than the second threshold.

28. The apparatus according to claim 25, wherein

a value of the preset number is determined based on one of the following:

a number threshold configured in the configuration information;

a first preset proportion and a number of beams associated with the first RA resource; or

a total number of repetition times of the Msg1.

29. The apparatus according to claim 25, wherein

X is determined based on one of the following:

a number threshold configured in the configuration information;

the preset number and a second preset proportion; or

a total number of repetition times of the Msg1.

30. The apparatus according to claim 25, wherein

the first rule comprises: if the first resource set list is configured in the configuration information, and a number of third beams associated with each of the at least one first resource set element is greater than or equal to a preset number, the UE selects all or some of RA resources associated with X fourth beams associated with the second resource set element as target RA resources;

the first rule further comprises:

in the first RA procedure, if a measured value of a fifth beam in the X fourth beams is less than or equal to the beam selection threshold, the UE quits transmitting, based on an RA resource associated with the fifth beam in the target RA resources, the first message.

31. The apparatus according to claim 6, wherein the second RA resource is associated with Q sixth beams, wherein Q is a positive integer; and

the first rule further comprises:

if the second repetition transmission indication indicates the first beam pattern, the number of the second beams in the N first beams is less than the preset number, and the second RA resource is configured in the configuration information; or if the first resource set list and the second RA resource are configured in the configuration information, and a number of seventh beams associated with each of a third resource set element is less than the preset number, the UE selects all or some of RA resources associated with X sixth beams in the Q sixth beams as the target RA resources, wherein

the third resource set element comprises one of the following:

all resource set elements in the first resource set element list;
a resource set element determined from the first resource set list based on the target beam identifier; or
a resource set element determined from the first resource set list based on the third repetition transmission indication, wherein
the seventh beam associated with each of the third resource set element is a first beam meeting the first condition in first beams that are associated with one of the third resource set element.

32. The apparatus according to claim 24, wherein the first rule comprises:

if the second repetition transmission indication is configured in the configuration information, and the second repetition transmission indication indicates the first beam pattern, the second repetition transmission indication is not used in the first RA procedure.

33. The apparatus according to claim 24, wherein
the first rule comprises:

in a case that the RA procedure with Msgl repetition is triggered by a first downlink physical control channel PDCCH command, a first time difference is greater than or equal to first preset duration, wherein
the first time difference is a time difference between a first reception time and a first sending time;
the first reception time is a time at which the UE receives a last orthogonal frequency division multiple access OFDM symbol of the first PDCCH command;
the first sending time is a time at which the UE sends a 1st OFDM symbol of a first random access occasion RO resource, wherein the first RO resource is a 1st RO resource that is selected by the UE for Msgl repetition; and
the first preset duration is determined based on at least one of the following:

physical uplink shared channel PUSCH preparation duration based on a UE capability and a subcarrier spacing SCS;
BWP switching processing duration;
a delay determined based on a frequency range FR;
an uplink switching gap delay; or
preparation duration required for measuring a beam in the RA procedure.

34. The apparatus according to claim 24, wherein
the first rule comprises:

in the first RA procedure or the second RA procedure, after an ith RA attempt for Msgl repetition, the UE completes, within second preset duration after a second reception time, selection of an RA resource used for an (i+1)th RA attempt for Msgl repetition; and
the second reception time comprises one of the following:

a time at which the UE receives a last OFDM symbol of a first random access response RAR window;
a time at which the UE receives a last OFDM symbol of a target message window; or
a time at which the UE receives the last OFDM symbol of the first RAR window through a physical downlink shared channel PDSCH, wherein
the second preset duration is determined based on at least preparation duration required for measuring a beam in the RA procedure;
the first RAR window is an RAR window corresponding to the ith RA attempt for Msgl repetition; and
the target message window is a message window of a third message corresponding to the ith RA attempt for Msgl repetition, wherein i is a positive integer.

35. An RA apparatus, comprising a sending module, wherein

the sending module is configured to send configuration information to UE, wherein
the configuration information is used by the UE to perform Msgl repetition; and

the configuration information is used to configure at least one of the following:

a first RA resource corresponding to a contention-free first RA procedure with Msgl repetition; or
a second RA resource corresponding to a contention-based second RA procedure with Msgl repetition.

36. The apparatus according to claim 35, wherein the sending module is specifically configured to send the configuration information to the UE based on a constraint condition; and
the constraint condition comprises:

the first RA resource and the second repetition transmission indication indicating a second beam pattern are not simultaneously configured, wherein
the second beam pattern is that different times of repetition transmission are performed by using a same beam.

37. A UE, comprising a processor and a memory, wherein the memory stores a program or instructions capable of running on the processor, and the program or instructions are executed by the processor to implement the steps of the RA method according to any one of claims 1 to 15.

38. A network side device, comprising a processor and a memory, wherein the memory stores a program or instructions capable of running on the processor, and the program or instructions are executed by the processor to implement the steps of the RA method according to any one of claims 16 to 19.

39. A communication system, wherein the communication system comprises the RA apparatus according to any one of claims 20 to 34 and the RA apparatus according to either of claims 35 and 36; or the communication system comprises the UE according to claim 37 and the network side device according to claim 38.

40. A readable storage medium, wherein the readable storage medium stores a program or instructions, and the program or instructions are executed by a processor to implement the steps of the RA method according to any one of claims 1 to 15, or to implement the steps of the RA method according to any one of claims 16 to 19.

41. A computer software product, wherein the computer software product is executed by at least one processor to implement the RA method according to any one of claims 1 to 15, or to implement the RA method according to any one of claims 16 to 19.

42. A chip, wherein the chip comprises a processor and a communication interface, the communication interface is coupled to the processor, and the processor is configured to run a program or instructions to implement the RA method according to any one of claims 1 to 15, or to implement the RA method according to any one of claims 16 to 19.

**Network side device**

**11**

**Terminal**

**11**

**Terminal**

## FIG. 1

| Step 1: Select an uplink carrier |
| --- |

| Step 2: Select an uplink BWP |
| --- |

| Step 3: Select an RA type |
| --- |

| Step 4: Select a DL beam |
| --- |

| Step 5: Select a preamble associated with the selected beam |
| --- |

| Step 6: Determine an RO resource associated with the selected beam |
| --- |

## FIG. 2

```
                    ┌──────────────────┐
                    │   Service unit   │
                    └──────────────────┘
                      ╱              ╲
        ┌──────────────────────┐   ┌──────────────────────┐
        │ Supplementary uplink │   │ Normal uplink carrier│
        │       carrier        │   │                      │
        └──────────────────────┘   └──────────────────────┘
                                      ╱              ╲
                          ┌──────────────┐        ┌──────────────┐
                          │   UL BWP0    │   ...  │   UL BWP3    │
                          └──────────────┘        └──────────────┘
```

RA type

Beam 1    ...    Beam 4

| RO0 | RO1 |
|-----|-----|
| RO2 | RO3 |

FIG. 3

```
┌──────────────────┐                    ┌──────────────────┐
│   Network side   │                    │        UE        │
│      device      │                    │                  │
└──────────────────┘                    └──────────────────┘
         │                                       │
         │   400: Send configuration information │
         │──────────────────────────────────────▶│
         │                                       │
         │              ┌────────────────────────────────────────────┐
         │              │ 401: Receive the configuration information  │
         │              └────────────────────────────────────────────┘
         │                                       │
┌────────────────────────────────────────┐      │
│ 402: Perform Msg1 repetition based on the│     │
│       configuration information          │     │
└────────────────────────────────────────┘      │
         │                                       │
```

FIG. 4

50

RA apparatus

Receiving module — 51

Execution module — 52

FIG. 5

60

RA apparatus

Sending module — 61

FIG. 6

900

901

Processor ⟺ Memory

902

FIG. 7

FIG. 8

FIG. 9

## INTERNATIONAL SEARCH REPORT

| | International application No. |
| --- | --- |
| | **PCT/CN2023/108163** |

**A.    CLASSIFICATION OF SUBJECT MATTER**

H04W72/04(2023.01)i

According to International Patent Classification (IPC) or to both national classification and IPC

**B.    FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXT, DWPI, IEEE: 随机接入, 第一消息, 第一信息, 重复, 重传, 资源, 波束, 门限, 次数, 配置, 竞争, 非竞争, 两步, 四步, RACH, Msg1, MsgA, repetition, retransmi+, resource, beam, list, set, times, configuration, competition, step4

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110769516 A (VIVO COMMUNICATION TECHNOLOGY CO., LTD.) 07 February 2020 (2020-02-07)<br>        description，paragraphs 0038-0158 and 0279-0282 | 1, 2, 16, 17, 20, 21, 35, 37-42 |
| A | CN 109392066 A (HUAWEI TECHNOLOGIES CO., LTD.) 26 February 2019 (2019-02-26)<br>        entire document | 1-42 |
| A | US 2020099494 A1 (HUAWEI TECHNOLOGIES CO., LTD.) 26 March 2020 (2020-03-26)<br>        entire document | 1-42 |
| A | US 2021058971 A1 (SAMSUNG ELECTRONICS CO., LTD.) 25 February 2021 (2021-02-25)<br>        entire document | 1-42 |

☐ Further documents are listed in the continuation of Box C.        ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **15 September 2023** | **20 September 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

| | INTERNATIONAL SEARCH REPORT<br>Information on patent family members | | | | International application No.<br>**PCT/CN2023/108163** | |
|---|---|---|---|---|---|---|

| Patent document<br>cited in search report | | | Publication date<br>(day/month/year) | Patent family member(s) | | Publication date<br>(day/month/year) |
|---|---|---|---|---|---|---|
| CN | 110769516 | A | 07 February 2020 | JP 2021531701 A | | 18 November 2021 |
| | | | | KR 20210036952 A | | 05 April 2021 |
| | | | | SG 11202100835 VA | | 25 February 2021 |
| | | | | EP 3829095 A1 | | 02 June 2021 |
| | | | | US 2021153259 A1 | | 20 May 2021 |
| | | | | WO 2020020030 A1 | | 30 January 2020 |
| | | | | VN 79874 A | | 25 August 2021 |
| | | | | IN 202127008299 A | | 25 August 2021 |
| CN | 109392066 | A | 26 February 2019 | WO 2019029214 A1 | | 14 February 2019 |
| US | 2020099494 | A1 | 26 March 2020 | WO 2016070429 A1 | | 12 May 2016 |
| | | | | JP 2017533682 A | | 09 November 2017 |
| | | | | EP 3200495 A1 | | 02 August 2017 |
| | | | | US 2017244529 A1 | | 24 August 2017 |
| | | | | CN 105766013 A | | 13 July 2016 |
| | | | | IN 201717013652 A | | 04 August 2017 |
| | | | | CN 109495974 A | | 19 March 2019 |
| | | | | CN 110932833 A | | 27 March 2020 |
| | | | | JP 2019186957 A | | 24 October 2019 |
| US | 2021058971 | A1 | 25 February 2021 | US 2022256612 A1 | | 11 August 2022 |
| | | | | EP 3997949 A1 | | 18 May 2022 |
| | | | | WO 2021034084 A1 | | 25 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210879048